Europäisches Patentamt

European Patent Office

Office européen des brevets

(19)

(11) **EP 0 472 167 B1**

(12) **EUROPÄISCHE PATENTSCHRIFT**

(45) Veröffentlichungstag und Bekanntmachung des Hinweises auf die Patenterteilung:
**09.10.1996 Patentblatt 1996/41**

(51) Int Cl.⁶: **F16C 29/06**

(21) Anmeldenummer: **91113942.6**

(22) Anmeldetag: **20.08.1991**

(54) **Wälzlager für Linearbewegungen, Stichwort: Rollenschienenführung**

Rolling contact bearing for linear movement, say rail guided rollers

Palier à contact de roulement pour mouvement linéaire, soit des rouleaux guidés sur rails

(84) Benannte Vertragsstaaten:
**AT BE CH DE ES FR GB IT LI NL SE**

(30) Priorität: **21.08.1990 DE 4026445**
**21.12.1990 DE 4041269**

(43) Veröffentlichungstag der Anmeldung:
**26.02.1992 Patentblatt 1992/09**

(73) Patentinhaber: **Deutsche Star GmbH**
**97424 Schweinfurt (DE)**

(72) Erfinder:
• **Höfling, Rainer**
**W- 8725 Arnstein (DE)**
• **Albert, Ernst**
**W- 8729 Sand-Main (DE)**
• **Blaurock, Günter**
**W- 8721 Niederwerrn (DE)**

(74) Vertreter: **Weickmann, Heinrich, Dipl.-Ing. et al**
**Patentanwälte**
**H. Weickmann, Dr. K. Fincke**
**F.A. Weickmann, B. Huber**
**Dr. H. Liska, Dr. J. Prechtel, Dr. B. Böhm**
**Postfach 86 08 20**
**81635 München (DE)**

(56) Entgegenhaltungen:
| | |
|---|---|
| DE-A- 3 540 099 | DE-A- 3 620 571 |
| DE-A- 3 707 342 | DE-C- 3 034 008 |
| DE-U- 8 714 759 | DE-U- 8 903 980 |
| JP-A- 6 412 129 | US-A- 4 504 097 |
| US-A- 4 765 754 | |

**Beschreibung**

Die Erfindung betrifft ein Wälzlager für Linearbewegungen, umfassend eine Führungsschiene mit einer Längsachse, einen Führungswagen sowie mindestens einen Wälzkörperumlauf zur Führung des Führungswagens auf der Führungsschiene, wobei der mindestens eine Wälzkörperumlauf eine geradlinige lastübertragende Wälzkörperreihe in Eingriff mit einer zur Längsachse der Führungsschiene parallelen lastaufnehmenden Laufbahn des Führungswagens und einer zur Längsachse der Führungsschiene parallelen lastaufnehmenden Laufbahn der Führungsschiene, eine im wesentlichen geradlinige, rücklaufende Wälzkörperreihe in einer Rücklaufführung des Führungswagens und zwei Bogenwälzkörperreihen in Bogenführungen des Führungswagens umfaßt und wobei der Führungswagen gegenüber der Führungsschiene durch mindestens ein Schmiermittelkissen schwingungsgedämpft ist.

Ein derartiges Wälzlager ist aus der DE-U- 89 03 980 bekannt. Bei dieser bekannten Lösung ist das Schmiermittelkissen in einem von dem Führungswagen gesonderten, ebenfalls auf der Führungsschiene angeordneten Dämpfungselement gebildet. Dieses ausschließlich der Dämpfung dienende Dämpfungselement bringt nicht nur einen erhöhten Kostenaufwand mit sich, sondern vergrößert auch den benötigten Bauraum für das Wälzlager.

Der Erfindung liegt die Aufgabe zugrunde, die Mittel zur Schwingungsdämpfung des Führungswagens zu vereinfachen.

Zur Lösung dieser Aufgabe wird erfindungsgemäß vorgeschlagen, daß das Schmiermittelkissen zwischen dem Führungswagen selbst und der Führungsschiene angeordnet ist. Die erfindungsgemäße Ausbildung ermöglicht es, Schwingungen des Führungswagens gegenüber der Führungsschiene auf einfache Weise ganz oder weitgehend zu unterdrücken.

Das Schmiermittelkissen wird man bevorzugt zwischen denjenigen Flächen der Führungsschiene und des Führungswagens anordnen, die senkrecht zu den Richtungen liegen, in denen mit Schwingungen gerechnet werden muß. Für den Fall einer U-förmigen Ausführung des Führungswagens mit einem einer Kopffläche der Führungsschiene gegenüberliegenden Stegteil und zwei je einer Seitenfläche der Führungsschiene gegenüberstehenden Schenkelteilen kann das Schmiermittelkissen zwischen mindestens einer der Paarungen Kopffläche-Stegteil und Seitenfläche-Schenkelteil vorgesehen sein. Dabei ist es insbesondere möglich, daß Schmiermittelkissen zwischen der Kopffläche der Führungsschiene und einer der Kopffläche gegenüberstehenden Innenfläche des Stegteils und ferner zwischen sich gegenüberstehenden, an die Kopffläche bzw. die Innenfläche angrenzenden Schrägflächen der Führungsschiene und des Stegteils vorgesehen sind.

Bei Vorhandensein zweier Wälzkörperumläufe in mindestens einem Schenkelteil des U-förmigen Führungswagens mit zwei jeweils einem Wälzkörperumlauf zugehörigen lastübertragenden Wälzkörperreihen kann ein Schmiermittelkissen zwischen den lastübertragenden Wälzkörperreihen durch die Führungsschiene und einen Teil des Führungswagens gebildet sein. Als vorteilhaft hat sich hierbei herausgestellt, wenn ein Schmiermittelkissen zwischen der Führungsschiene und einer Stützleistenanordnung gebildet ist, welche der Stützung der lastübertragenden Wälzkörperreihen an dem Führungswagen dient.

Denkbar ist auch, daß an dem U-förmigen Führungswagen, und zwar in dessen außerhalb der Wälzkörperumläufe gelegenen Endbereichen, Führungsschuhe angebracht sind, welche zusammen mit den Seitenflächen der Führungsschuhe jeweils mindestens ein Schmiermittelkissen bilden. Dann kann bei Ausführung einer Seitenfläche der Führungsschiene mit einem Trapezprofil der Führungsschuh ein komplementäres Trapezprofil aufweisen und können Schmiermittelkissen zwischen jeweils mindestens drei Begrenzungsflächen beider Trapezprofile ausgebildet sein.

Bevorzugt sind die Führungsschuhe innerhalb eines Hauptkörpers des Führungswagens in Ausnehmungen dieses Hauptkörpers untergebracht. Die Führungsschuhe können dann innerhalb ihrer Ausnehmungen an Begrenzungsflächen dieser Ausnehmungen anliegen, welche bündig mit einer der Kopffläche der Führungsschiene gegenüberliegenden Innenfläche des Stegteils sind.

Das Schmiermittelkissen wird bevorzugt als ein Schmierölkissen ausgeführt, weil im Falle eines Schmierölkissens die satte Anlage des Schmieröls an den das Kissen begrenzenden Flächen auch im Betrieb ständig gewährleistet ist, insbesondere dann, wenn man das Schmieröl des Schmiermittelkissens beispielsweise durch eine extern unter Druck stehende Schmierölquelle unter Druck hält. Der Abstand zwischen den das Schmiermittelkissen zwischen sich begrenzenden Flächen wird in der Größenordnung von 5µ bis ca. 100 µ, vorzugsweise zwischen ca. 5 µ und ca. 40 µ liegen.

Da der mindestens eine Wälzkörperumlauf des Wälzlagers in der Regel einer ständigen Schmierung bedarf, wird zur Vereinfachung vorgeschlagen, daß das Schmiermittel des Schmiermittelkisses von einem Schmiermittelversorgungssystem bereitgestellt ist, welches auch der Schmiermittelversorgung des mindestens einen Wälzkörperumlaufs dient.

Eine bevorzugte Ausbildung der Erfindung sieht vor, daß die Wälzkörper des mindestens einen Wälzkörperumlaufs als zylindrische Rollen ausgebildet sind.

Ein erfindungsgemäßes Wälzlager kann insbesondere in Verbindung mit einer Bauart des Wälzlagers ausgeführt sein, bei der die Merkmale des Anspruchs 15 verwirklicht sind. Diese Wälzlagerbauart ist an sich bereits aus der JP-A-62 169 220 bekannt, ermöglicht eine geringe Bauhöhe des Führungswagens und läßt sich anwenden, gleichgültig, ob die auf einer Seite der Führungsschiene gelegenen lastaufnehmenden Laufbahnen in Richtung auf die Mittelebene hin konvergieren oder divergieren. Im ersten Fall können die lastübertragenden Rollenreihen nahe zusammengerückt werden, im letzteren Fall die rücklaufenden Rollenreihen. In beiden Fällen ergibt sich die Möglichkeit der Bauhöhenverminderung.

Bei einem aus der DE-A- 35 40 099 bekannten Wälzlager (siehe dort z. B. Fig. 18) sind zu beiden Seiten einer Führungsschiene zwischen dieser Führungsschiene und einem U-förmigen Führungswagen je zwei Rollenumläufe vorhanden. Dabei sind in allen Rollenumläufen alle Rollen zueinander achsparallel. Die Rollen der lastübertragenden Rollenreihen auf einer Seite der Führungsschiene bilden zwei Kraftübertragungsebenen, die miteinander einen Winkel von ungefähr 90° einschließen. Der 90°-Winkel ist günstig, weil er einen hohen Widerstand des Wälzlagers gegen Kipp- und Torsionsbelastungen um die Längsachse der Führungsschiene liefert und gewährleistet, daß die Belastbarkeit in allen Hauptrichtungen gleich ist. Alle Rollen jedes dieser beiden auf einer Seite gelegenen Rollenumläufe liegen jeweils in einer Umlaufebene, die mit der jeweiligen Kraftübertragungsebene zusammenfällt. Damit liegen auch die Umlaufebenen der beiden auf einer Seite der Führungschiene gelegenen Rollenumläufe unter einem Winkel von 90° zueinander. Legt man nun, wie in der Fig. 18 der DE-A- 35 40 099 geschehen, die lastaufnehmenden Laufbahnen der beiden auf einer Seite der Führungsschiene gelegenen Rollenumläufe so, daß diese Laufbahnen zur Mittelebene der Führungsschiene hin divergieren, so liegen die Rücklaufrollenreihen der beiden Rollenumläufe notwendigerweise in einem wesentlich größeren Abstand voneinander als die lastübertragenden Rollenreihen mit der Folge, daß die Höhe des Führungswagens größer wird als häufig erwünscht.

Aus der US-A- 4,765,754 ist es an sich bekannt, daß in einem Rollenumlauf die Rollen der rücklaufenden Rollenreihe gegenüber den Rollen der lastübertragenden Rollenreihe in Richtung der Rollenachsen dieses Rollenumlaufs versetzt sind, wobei sich auch hier zwischen aufeinanderfolgenden Rollen der Bogenrollenreihen kleinere Einzelversatzstrecken ergeben, die - über die jeweilige Bogenrollenreihe summiert - der Versatzstrecke zwischen lastübertragender Rollenreihe und rücklaufender Rollenreihe entsprechen. Bei dieser Ausführungsform hat man aber nicht die Möglichkeit erkannt, bei einer Führungsschiene mit U-förmigem Laufwagen durch die Anwendung dieser Maßnahme eine Bauhöhenverringerung zu ermöglichen.

Aus der DE-A- 37 07 342 ist es bekannt, die Umlaufebenen von zwei auf einer Seite einer Führungsschiene gelegenen RollenUmläufen eines U-förmigen Führungswagens in Umlaufebenen anzuordnen, die zueinander und zur Stegebene des Führungswagens annähernd parallel sind. Dabei mußte aber auf die für die Laufeigenschaften günstige Parallelstellung sämtlicher Rollen der einzelnen Rollenumläufe verzichtet werden.

Aus der DE-A- 36 20 571 ist es bekannt, und zwar aus deren Fig. 15 - 22, daß man die beiden Rollenumläufe eines U-förmigen Führungswagens auf der einen Seite einer Führungsschiene, in Längsrichtung der Führungsschiene betrachtet, sich kreuzend anordnet. Auch bei dieser Ausführungsform läßt sich eine verhältnismäßig geringe Bauhöhe mit in jedem Rollenumlauf durchwegs achsparallelen Rollen erzielen. Der mechanische Aufbau einer solchen Anordnung wird aber durch die Kreuzung der Rollenumläufe sehr kompliziert. Außerdem ergibt sich notwendigerweise eine Verlängerung des Führungswagens gegenüber der Länge jeweils eines einzigen Rollenumlaufs, so daß man eine Verlängerung des Führungswagens ohne gleichzeitige Erhöhung der Tragzahl in Kauf nehmen muß oder - anders ausgedrückt - bei gegebener Länge des Führungswagens eine Verringerung der Tragzahl in Kauf nehmen muß.

Bei einer anderen aus der DE-A- 36 20 571 ebenfalls bekannten Ausführungsform (siehe dort Fig. 23 - 28) hat man versucht, die an einem U-förmigen Führungswagen auf der einen Seite der Führungsschiene angebrachten beiden Rollenumläufe übereinander in zwei zueinander parallelen und zur Stegebene ebenfalls parallelen Umlaufebenen anzuordnen und dabei eine geringe Bauhöhe zu erzielen. Dabei hat man aber in Kauf nehmen müssen, daß die in den Bogenrollenreihen aufeinanderfolgenden Rollen jeweils gegeneinander gekippt sind, also nicht mehr achsparallel liegen und deshalb wesentlich schlechtere Laufeigenschaften besitzen. Überdies ist auch bei dieser Ausführungsform die Führung der Rollen in den Bogenrollenreihen nur durch komplizierte Führungselemente zu bewerkstelligen.

Dadurch, daß bei der Weiterbildung des erfindungsgemäßen Wälzlagers in jedem Rollenumlauf sämtliche Rollen achsparallel zueinander sind, ergeben sich optimale Laufeigenschaften für die Rollenumläufe, wie an sich aus der DE-A- 35 40 099 bekannt.

Dadurch, daß die Projektionen der beiden Rollenumläufe auf einer Seite der Führungsschiene verschneidungsfrei sind, wird erreicht, daß, wie ebenfalls aus der DE-A- 35 40 099 bekannt, die Längserstreckungen der beiden Rollenumläufe gleich sein können, so daß eine bestimmte geforderte Tragzahl des Wälzlagers mit minimaler axialer Länge des Führungswagens erreicht werden kann.

Die Maßnahmen des Anspruchs 16 lassen eine minimale Bauhöhe des Führungswagens erreichen und ermöglichen insgesamt einen besonders kompakten Aufbau des Führungswagens.

Im Hinblick auf optimale Tragzahlen gegenüber Kipp- und Torsionsbelastungen und Normalbelastungen in allen Hauptrichtungen des Führungswagens relativ zur Führungsschiene wird die an sich aus der Figur 18 der DE-A- 35 40 099 bekannte Maßnahme des Anspruchs 18 vorgeschlagen.

Die Erfindung ist insbesondere anwendbar, wenn zu beiden Seiten der Mittelebene je zwei Rollenumläufe angeordnet sind, was ebenfalls aus der DE-A- 35 40 099 bekannt ist. Dabei ist dann auch die Realisierung der Merkmale des Anspruchs 20 möglich.

Für die geometrische Struktur der Bogenführungen, der Rücklaufführung und der Führung der lastübertragenden Rollenreihe kann eine Bauart entsprechend Anspruchs 21 gewählt werden. Um dabei die Fertigung des Wälzlagers zu vereinfachen, werden die Maßnahmen der Ansprüche 22 und 23 vorgeschlagen.

Anspruch 24 ermöglicht die einfache Herstellung einer Endeinheit des Führungswagens. Bei dieser Ausführungsform lassen sich die Bogenrollenlaufbahnen und die eine Bogenrollenstützbahn auf einfache Weise mit einer beispielsweise auf einer Kreisbogenlinie geführten Fingerfräse in dem Grundkörper herstellen. Will man den Grundkörper nach einem Gieß- oder Spritzverfahren beispielsweise aus Kunststoff oder Leichtmetall herstellen, ergeben sich keine Ausformungsprobleme. Die zweite Bogenrollenstützbahn läßt sich in ebenso einfacher Weise an dem Deckelkörper herstellen. Das Einbringen der Rollen in den jeweiligen Rollenumlauf wird besonders einfach, weil man den Grundkörper zunächst an die Hauptkörpereinheit anbauen kann, dann sämtliche Rollen im Bereich des noch offenen Grundkörpers in axialer Richtung einführen kann (axial heißt in Richtung der Rollenachse) und letztlich nur noch den Deckelkörper auf den Grundkörper aufsetzen muß.

Eine weitere bauliche Vereinfachung ergibt sich durch die Merkmale des Anspruchs 25.

Um einen möglichst widerstandsarmen und geräuscharmen Lauf der Rollen eines Rollenumlaufs sicherzustellen, werden die Maßnahmen des Anspruchs 26 vorgeschlagen. Wenn man die Übergangsstützbahnabschnitte in den Endteil verlegt, so deshalb, weil man bestrebt ist, im Bereich der Hauptkörpereinheit aus Fertigungsgründen ausschließlich gerade Laufbahnen und Stützbahnen erzeugen zu müssen. Die Übergangsstützbahnabschnitte können grundsätzlich innerhalb des beispielsweise halbkreisförmigen Bogenverlaufs der Bogenführungen vorgesehen sein. Man kann aber auch die Bogenführungen in einer Endeinheit an ihren beiden Enden so verlängern, daß in den Verlängerungen die an den Umfangsflächen der Rollen anliegenden Laufbahnabschnitte flächenparallel zu den lastaufnehmenden Laufbahnen der Führungsschiene und des Führungswagens und parallel zu den Rücklaufrollenlaufbahnen sind, und die Übergangsstützbahnabschnitte in den Bereich dieser Verlängerungen legen.

Optimale Laufeigenschaften werden dann erzielt, wenn ein stetiger Übergang von den Bogenrollenstützbahnen und den Lastrollenstützbahnen gewährleistet ist und wenn andererseits auch die Rollenmittelpunkte sämtlicher Rollen der jeweiligen Bogenrollenreihe möglichst nahe der Umlaufebene des jeweiligen Rollenumlaufs liegen.

Um eine Montage der Rollen in dem Führungswagen im Zustand der Trennung von der Führungsschiene ermöglichen zu können, werden die Maßnahmen des Anspruchs 27 vorgeschlagen.

Der weiteren Vereinfachung der Herstellung des Führungswagens dient das Merkmal des Anspruchs 28. Man braucht dann nur noch zwei der insgesamt vier Lastrollenstützbahnen der beiden auf einer Seite der Führungsschiene vorgesehenen Rollenumläufe an der Hauptkörpereinheit des Führungswagens anzubringen, während man die beiden anderen Lastrollenstützbahnen an der gesondert zu fertigenden Stützleistenanordnung ausbilden kann.

Anspruch 29 zeigt eine besonders vorteilhafte Ausführungsform des erfindungsgemäßen Wälzlagers auf. Bei dieser Ausführungsform werden die Endeinheiten mit dem jeweils einstückig an ihnen angeformten Stützleistenabschnitt identisch, jedenfalls dann, wenn der Führungswagen in bezug auf die Längsmittelebene symmetrisch ist, so daß die Zahl der zu fertigenden unterschiedlichen Komponenten des Wälzlagers verringert wird.

Die lastaufnehmenden Laufbahnen können grundsätzlich an der Hauptkörpereinheit selbst ausgebildet sein. Unter Umständen können aber auch die Merkmale des Anspruchs 30 vorteilhaft sein. Der Vorteil liegt zum einen darin, daß man für den Einsatz hochwertigere Werkstoffe als für den Führungswagen selbst mit relativ geringen Kosten verwenden kann. Ein weiterer Vorteil liegt darin, daß die Anlageverhältnisse zwischen Rollenumfangsflächen und lastaufnehmenden Laufbahnen verbessert werden können, indem man das Wälzlager entsprechend Anspruch 31 ausbildet.

Anspruch 32, insbesondere auch Anspruch 33, ermöglichen eine reibungsarme Anpassung eines Einsatzes um die Schaukelachse.

Die Merkmale des Anspruchs 34 dienen dazu, einen Einsatz mit einfachen Mitteln annähernd in seiner Betriebsstellung halten zu können, schon bevor die Rollen in den Führungswagen eingebracht werden. Der Eingriff des Einsatzendes in die Endeinheit muß dabei so viel Spiel des Einsatzes gegenüber dem Führungswagen in Drehrichtung um die Schaukelachse gewähren, daß sich der Einsatz nach dem Einbringen der Rollen schaukelnd zu deren Umfangsflächen parallel stellen kann.

Eine Weiterbildung der Erfindung ist in Anspruch 35 aufgezeigt. Diese Ausbildung der Rücklaufführung läßt sich einfach herstellen, indem man nach Bohren der zylindrischen Bohrung die rechteckigen Nischen von der Bohrung aus beispielsweise durch Räumen erzeugt. Zum Stand der Technik kann bezüglich dieses Merkmals auf die US-A- 4,504,097 verwiesen werden. Dort ist der Rücklaufkanal ebenfalls ausgehend von einer zylindrischen Bohrung gebildet, wobei in die Umfangswände der zylindrischen Bohrung vier dreieckige Nischen eingelassen sind. Der Durchmesser der Bohrung ist bei dieser Ausführungsform größer als der Durchmesser der Rollen und größer als die axiale Länge der Rollen.

Zur Herstellung des Übergangs zwischen der Bogenführung und der Rücklaufführung kann das erfindungsgemäße Wälzlager entsprechend Anspruch 36 ausgeführt sein. Eine andere Möglichkeit, um mit geringem Fertigungsaufwand eine für Rollen geeignete Rücklaufführung zu schaffen, bieten die Merkmale der Ansprüche 37 und 38. Die Führungsauskleidung kann aus Kunststoff hergestellt werden. Zum Stand der Technik bezüglich dieser Lösung wird auf die DE-A- 35 40 099 verwiesen.

Die Merkmale der Ansprüche 39 und 40 können z. B. in der Weise realisiert sein, daß je eine Endeinheit an beiden Enden der Hauptkörpereinheit mit einem Stück der in Längsrichtung vorzugsweise an mittlerer Stelle ihrer Länge geteilten Führungsauskleidung verbunden ist.

Die Herstellung der Führungsauskleidung kann dadurch erleichtert werden, daß die Führungsauskleidung in ihrer Längsrichtung geteilt ist, d. h. aus zwei Schalen besteht, die vor oder beim Einsetzen in den Kanal miteinander verbunden werden. Diese Herstellungsweise der Führungsauskleidung ist insbesondere dann von herstellungstechnischem Vorteil, wenn die Führungsauskleidung mit einem Teil einer Endeinheit verbunden ist.

Weiter oben war schon darauf hingewiesen worden, daß auch Stützleisten einstückig mit Teilen der Endeinheit ausgebildet sein können. Bei einer bevorzugten Ausführungsform ist es so, daß an einem Grundkörper einer Endeinheit sowohl eine Stützleiste, als auch die Führungsauskleidungen für die Rücklaufführungen von zwei Rollenumläufen angebracht sind oder zumindest jeweils die eine Teilschale dieser Führungsauskleidungen. Auf diese Weise verringert sich die Zahl der für den Aufbau des Wälzlagers notwendigen Teile.

Ist an einem Ende der Hauptkörpereinheit ein Grundkörper mit zwei Deckelkörpern angebracht, können die Merkmale des Anspruchs 41 vorgesehen sein. Die Abschlußplatte weist vorzugsweise Kammern auf, in welchen der Grundkörper und die Deckelkörper aufgenommen werden. Grundsätzlich besteht die Möglichkeit, eine solche Abschlußplatte über Grundkörper und Deckelkörper zu setzen, auch dann, wenn für die beiden Rollenumläufe zwei Grundkörper mit je einem Deckelkörper vorgesehen sind. Die Abschlußplatte kann einmal für den sicheren Halt der Deckelkörper an dem jeweiligen Grundkörper sorgen, so daß es genügt, Deckelkörper und Grundkörper nur durch Positionierungszapfen miteinander zu verbinden und den Zusammenhalt im übrigen der Abschlußplatte zu überlassen. Darüber hinaus sorgt die Abschlußplatte für eine kompakte Erscheinung der Endeinheit, indem sie die Stoßflächen zwischen Grundkörper und Deckelkörper überdeckt.

Ist das Wälzlager mit je zwei Rollenumläufen zu beiden Seiten der Führungsschiene ausgeführt, ist die Abschlußplatte bevorzugt entsprechend Anspruch 42 ausgebildet. Es wäre auch denkbar, in einem Grundkörper einer Endeinheit die Bogenführungen von vier Rollenumläufen anzubringen und diesem einen Grundkörper demgemäß vier Deckelkörper zuzuordnen. Aus Gründen der einfacheren Herstellung des Grundkörpers bevorzugt man aber die Möglichkeit, an dem Ende einer Hauptkörpereinheit mit vier Rollenumläufen zwei getrennte Grundkörper mit jeweils zwei Deckeln vorzusehen, wobei dann die Abschlußplatte die beiden Grundkörper und deren Deckelkörper übergreift und alle Trennflächen zwischen Grundkörper und Deckelkörper abdeckt.

Die Abschlußplatte bietet sich dann als geeigneter Träger für eine dem Profil der Führungsschiene angepaßte Dichtplatte an. Im Hinblick auf ihre Dichtfunktion führt man die Dichtplatte für das gesamte Profil der Führungsschiene einstückig aus.

Die Merkmale des Anspruchs 44 ermöglichen es, den Raumbereich der Rollen nach außen schmiermitteldicht zu kapseln.

Die Ansprüche 45 und 46 betreffen spezielle Ausbildungen eines Schmiermittelkissens bei einem erfindungsgemäßen Wälzlager, das die besondere Bauart nach Anspruch 15 aufweist. Anspruch 47 bietet eine Möglichkeit, je nach Einbauverhältnissen des Wälzlagers in einer übergeordneten Konstruktion die Schmiermittelversorgung jeweils an möglichst günstiger Stelle anschließen zu können.

Die Ansprüche 48 bis 64 stellen weitere Ausgestaltungen und Weiterbildungen des erfindungsgemäßen Wälzlagers dar.

Die beiliegenden Figuren erläutern die Erfindung anhand von Ausführungsbeispielen. Es stellen dar

Fig. 1     einen zur Achse der Führungsschiene orthogonalen Schnitt durch ein erfindungsgemäßes Wälzlager;

Fig. 1a    denselben Schnitt wie Figur 1 mit weiteren Angaben zur Geometrie der Rollenumläufe;

Fig. 2     eine Explosionsdraufsicht auf den Führungswagen des Wälzlagers in Pfeilrichtung II der Fig. 1;

Fig. 3     einen Schnitt nach Linie III-III der Fig. 2;

Fig. 4     einen Schnitt nach Linie IV-IV der Fig. 3;

Fig. 4a    einen Schnitt entsprechend Fig. 4 in Verbindung mit einem zugehörigen Deckelkörper;

Fig. 5     eine Ansicht in Pfeilrichtung V der Fig.4;

Fig. 6     die Ansicht eines Deckelkörpers von unten, welcher mit dem in Fig. 5 dargestellten Grundkörper zusammensetzbar ist;

Fig. 6a    eine Ansicht in Pfeilrichtung VIa der Fig.6;

Fig. 7     eine schematische Ansicht zu Fig. 6 in Pfeilrichtung VII der Fig. 6;

Fig. 8 die Abwicklung einer Bogenrollenstützbahn gemäß Linie VIII der Fig. 5;

Fig. 9 einen Schnitt nach Linie IX-IX der Fig. 1;

Fig. 10 einen achsnormalen Schnitt durch die Führungsschiene;

Fig. 11 einen Schnitt entsprechend demjenigen der Fig. 1 bei einer abgewandelten Ausführungsform der Erfindung;

Fig. 11a einen vergrößerten Schnitt durch den Laufbahneinsatz im Bereich seiner Anlagefläche an dem Führungswagen;

Fig. 12 einen Schnitt entsprechend demjenigen der Fig. 4 bei einer abgewandelten Ausführungsform gemäß Fig. 11;

Fig. 13 eine Ansicht in Pfeilrichtung XIII der Fig. 12;

Fig. 14 einen Schnitt durch ein Wälzlager entsprechend der Fig. 11 im Bereich der Schmiermittelversorgung von Schmiermittelkissen;

Fig. 15 eine Draufsicht entsprechend derjenigen der Fig. 2 auf eine abgewandelte Ausführungsform mit schmiermittelkissenbildenden Führungsschuhen; und

Fig. 16 einen Schnitt nach Linie XVI-XVI der Fig. 15.

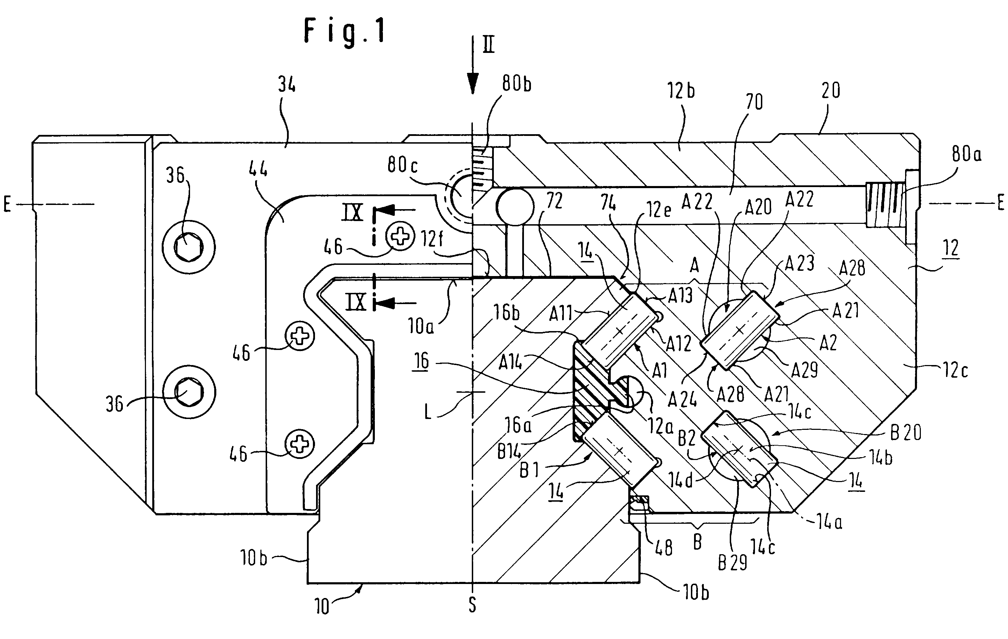

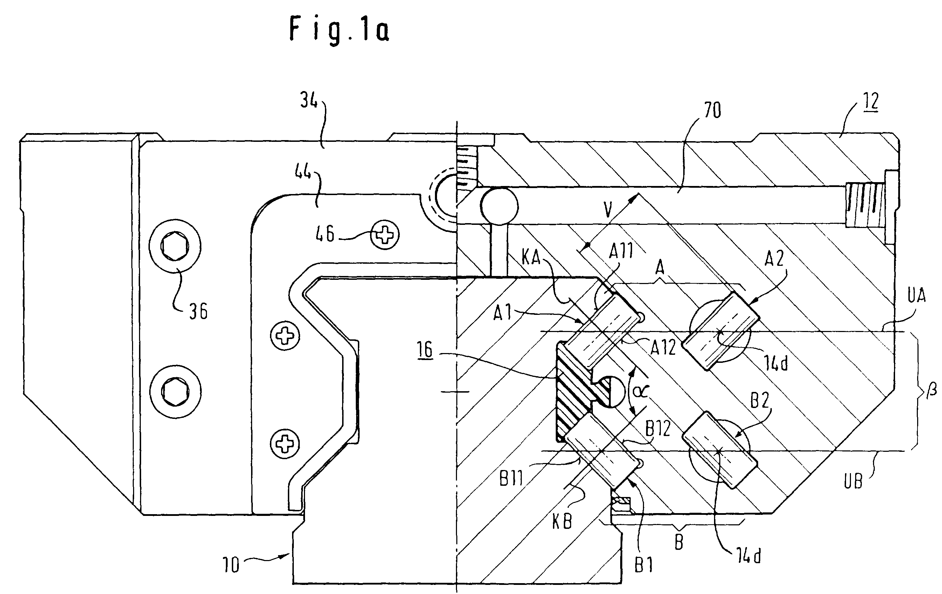

In Figur 1 ist mit 10 eine Führungsschiene bezeichnet, welche eine Kopffläche 10a und Seitenflächen 10b aufweist. Die Führungsschiene ist symmetrisch in bezug auf eine Mittelebene S. Auf der Führungsschiene 10 ist ein Führungswagen 12 senkrecht zur Zeichenebene der Figur 1 geführt. Der Führungswagen ist ebenfalls symmetrisch in bezug auf die Mittelebene S. Die Achse der Schiene ist mit L bezeichnet.

Die Führung des Führungswagens 12 auf der Führungsschiene 10 erfolgt mittels insgesamt 4 Rollenumläufen, von denen zwei in der rechten Hälfte in der Figur 1 dargestellt und mit A bzw. B bezeichnet sind. Im folgenden wird der Rollenumlauf A im einzelnen beschrieben. Insoweit, als der Rollenumlauf B dem Rollenumlauf A entspricht, wird auf den Rollenumlauf B im einzelnen nicht eingegangen. Die einzelnen Elemente des Rollenumlaufs A werden mit A1, A2 usw. bezeichnet. Für die einzelnen Elemente des Rollenumlaufs B werden dementsprechende Bezugszeichen Bx, By usw. verwendet. Die Rollen der Rollenumläufe sind mit 14 bezeichnet. Diese Rollen 14 weisen eine Rollenachse 14a, eine Umfangsfläche 14b und je zwei Endflächen 14c und einen Mittelpunkt 14d auf.

Der Rollenumlauf A besteht aus einer Vielzahl von Rollen 14, die sämtlich achsparallel zueinander angeordnet sind. Der Rollenumlauf A umfaßt eine lastübertragende geradlinige Rollenreihe A1 und eine rücklaufende im wesentlichen geradlinige rücklaufende Rollenreihe A2. Die Rollen der lastübertragenden Rollenreihe A1 liegen an der Führungsschiene 10 in einer lastaufnehmenden Rollenlaufbahn All und dem Führungswagen 12 in einer lastaufnehmenden Rollenlaufbahn A12 an, d.h., die Umfangsfläche 14b liegt an den lastaufnehmenden Laufbahnen All und A12 an. Die Endflächen 14c der Rollen der lastübertragenden Rollenreihe Al liegen an zwei Lastrollenstützbahnen A13 und A14 an. Die Lastrollenstützbahn A13 ist unmittelbar an dem Führungswagen 12 angeordnet, während die Lastrollenstützbahn A14 an einer Stützleistenanordnung 16 angebracht ist, die ihrerseits an dem Führungswagen 12 befestigt ist, und zwar dadurch, daß sie mit einem Befestigungsteil 16a in eine hinterschnittene Nut 12a des Führungswagens 12 eingreift.

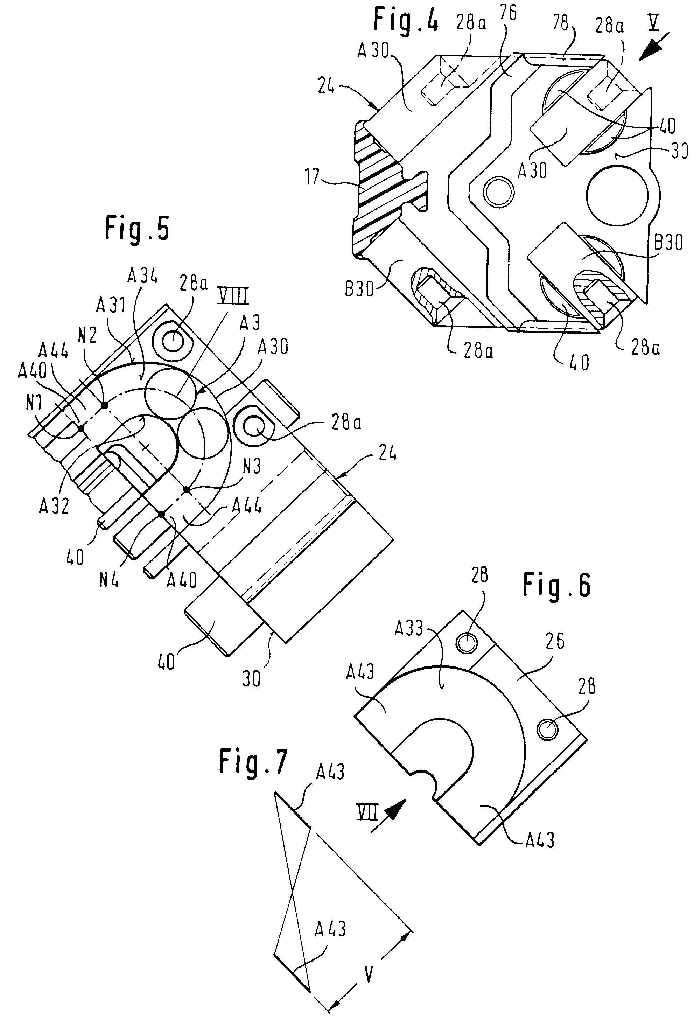

Der Führungswagen 12 besteht aus einem Stegteil 12b mit einer Stegebene E und zwei Schenkeln 12c. Der Rollenumlauf A umfaßt ferner Bogenrollenreihen A3 an beiden Enden des Laufwagens, von denen eine in Figur 5 durch zwei Rollen angedeutet ist. Die Bogenrollenreihe A3 ist durch eine äußere Bogenrollenlaufbahn A3 und eine innere Bogenrollenlaufbahn A32 geführt, die beide an den Umfangsflächen 14b der jeweiligen Rollen anliegen. Ferner sind die Rollen der Bogenrollenreihe A3 durch Bogenrollenstützbahnen A34 und A33 gestützt, welche an den Endflächen 14c anliegen. Die Rollen der rücklaufenden geradlinigen Rollenreihe A2 sind in einer Rücklaufführung A20 geführt, die von einer Bohrung A29 mit anschließenden Rechtecknischen A28 gebildet ist. Durch die Nischen A28 sind innere Rücklaufrollenlaufbahnen A22 und äußere Rücklaufrollenlaufbahnen A21 gebildet und ferner Rücklaufrollenstützbahnen A23 und A24.

Die äußere Bogenrollenlaufbahn A31 schließt tangential an die lastaufnehmende Rollenlaufbahn All der Führungsschiene 10 und an die äußere Rücklaufrollenlaufbahnen A21 an. Die innere Bogenrollenlaufbahn A32 schließt tangential an die lastaufnehmende Rollenlaufbahn A12 des Führungswagens 12 und an die inneren Rücklaufrollenlaufbahnen A22 der Rücklaufführung A20 an. Die Bogenrollenstützbahn A34 schließt mit stetigem Übergang an die Lastrollenstützbahn A14 der Stützleistenanordnung 16 und an die Rücklaufrollenstützbahn A24 der Rücklaufführung A20 an. Die Bogenrollenstützbahn A33 schließt stetig an die Lastrollenstützbahn A13 und die Rücklaufrollenstützbahn A23 an.

In Figur la sind die Kraftübertragungsebenen der Rollenumläufe A und B mit KA und KB bezeichnet. Ferner sind in Figur 1a die Umlaufbahnen UA und UB der beiden Rollenumläufe A und B eingezeichnet. Die Kraftübertragungsebene KA steht senkrecht auf den beiden lastaufnehmenden Rollenlaufbahnen All und A12, während die Kraftübertragungsebene KB senkrecht auf den lastaufnehmenden Rollenlaufbahnen B11 und B12 steht. Die Umlaufebene UA enthält die Rollenmittelpunkte 14d der lastübertragenden Rollenreihe AI und der rücklaufenden Rollenreihe A2, während die Umlaufebene UB die Rollenmittelpunkte 14d der lastübertragenden Rollenreihe B1 und der rücklaufenden Rollenreihe B2 enthält. Die Mittelpunkte der Bogenrollenreihen A3 liegen nahe den Umlaufebenen.

Man erkennt aus Figur la, daß die Kraftübertragungsebenen KA,KB miteinander einen Winkel α von ca. 90° einschließen und daß die Umlaufebenen UA und UB miteinander einen Winkel β von annähernd Null Grad einschließen.

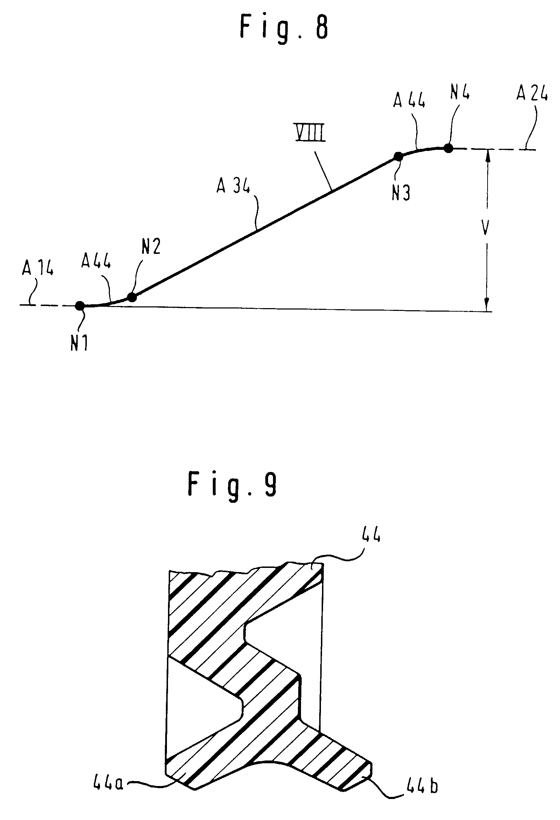

Die lastübertragende Rollenreihe AI ist in Richtung der Rollenachsen um das Maß V versetzt, wie aus Figur la hervorgeht. Entsprechend diesem Maß V steigen die Bogenrollenstützbahnen A33 und A34 zwischen der lastübertragenden Rollenreihe A1 und der rücklaufenden Rollenreihe A2 im wesentlichen stetig an, wie aus Figur 8 zu entnehmen ist, wo die Mittellinie VIII der Bogenrollenstützbahn A34 in Abwicklung wiedergegeben ist.

In Figur 7 erkennt man schematisch den schraubenförmigen Verlauf der Bogenrollenstützbahn A33. Entsprechend schraubenförmig ist auch der Verlauf der Bogenrollenstützbahn A34.

Die Bahnen A31,A32,A33 und A34 bilden eine Bogenführung A30. Man erkennt, daß diese Bogenführung A30 in Achsrichtung der Rollen betrachtet einen Kreisringverlauf besitzt (Figur 5) und daß sich an diesem Kreisringverlauf Übergangsabschnitte A40 der Bogenführung A30 anschließen, wobei in diesen Übergangsabschnitten Übergangsstützbahnabschnitte A44 vorliegen, die - wie aus Figur 8 ersichtlich - tangential an die Bogenrollenstützbahn A34, an die Lastrollenstützbahn A14 und an die Rücklaufrollenstützbahn A24 anschließen.

Mit N1,N2,N3 und N4 sind Niveaupunkte auf der Linie VIII jeweils am Anfang und am Ende der Stützbahnabschnitte A44 bezeichnet. In Figur 7 sind entsprechende Stützbahnabschnitte A43 an den Enden der Bogenrollenstützbahn A33 eingezeichnet.

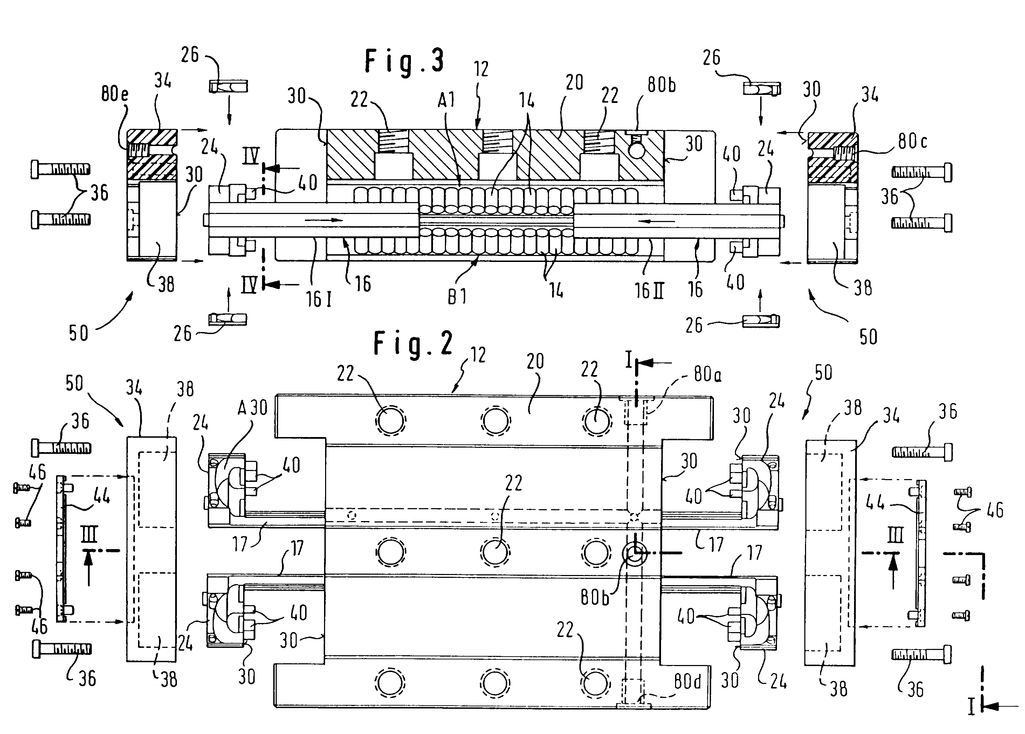

In den Figuren 2 und 3 erkennt man, daß der Führungswagen 12 einen Hauptkörper 20 umfaßt mit Bohrungen 22, beispielsweise zur Befestigung eines linear zu führenden Werkzeugmaschinenschlittens.

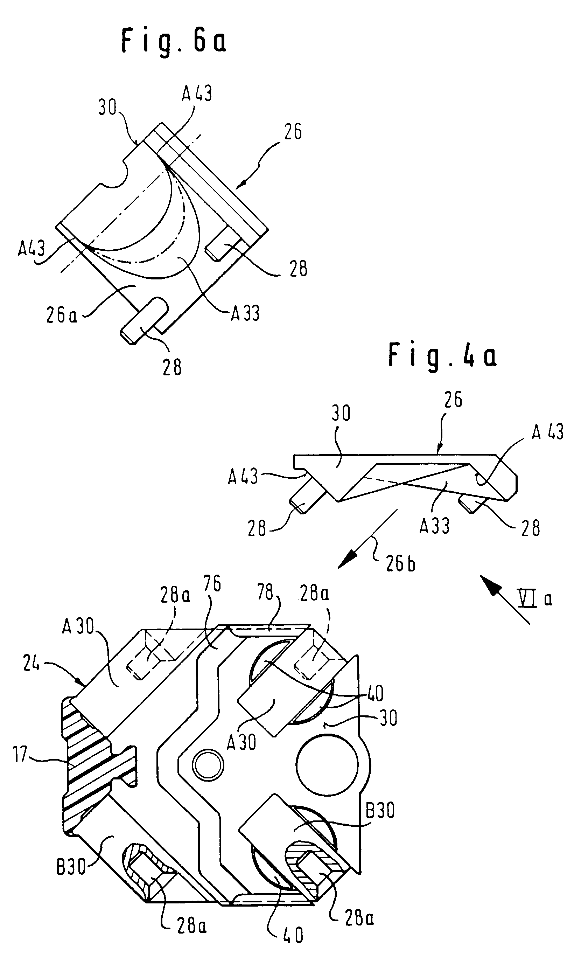

Die Stützleistenanordnung 16 ist von zwei Stützleistenabschnitten 17 gebildet. Jeder Stützleistenabschnitt 17 ist mit einem Grundkörper 24 verbunden, welcher - wie in Figur 4 dargestellt - zwei Bogenführungen A30 und B30 aufnimmt und mit dem Stützleistenabschnitt 17 einstückig verbunden ist. Der Grundkörper 24 und der Stützleistenabschnitt 17 sind aus Kunststoff gespritzt, während der Lagerhauptkörper aus Metall gearbeitet ist. Die Bogenrollenführungen A30 und B30 sind in den Grundkörper so eingearbeitet, daß beim Herstellen durch Spritzen oder Gießen eine Entformung leicht möglich ist. Der Grundkörper 24 ist mit zwei Deckelkörpern 26 verbunden, welche in den Fig. 4a,6 u.6a dargestellt sind. An den Deckelkörpern 26 sind die Bogenrollenstützbahnen A33 angebracht. Die Deckelkörper 26 sind mit Positionierungszapfen 28 versehen, welche in Positionierungslöcher 28a des Grundkörpers 24 eingesteckt werden. Der Grundkörper 24 liegt in einer Trennebene 30 an dem Lagerhauptkörper 20 an. Wie aus Figur 2 ersichtlich, ist unter Zugrundelegung der symmetrischen Anordnung gemäß Figur 1 und la an jedem der Stützleistenabschnitte 17 ein Grundkörper 24 mit zwei Deckelkörpern 26 vorgesehen. Die Deckelkörper 26 sind an dem Grundkörper 24 befestigt und liegen mit Anlageflächen 26a an dem Grundkörper 24 an.

Die mit den Deckelkörpern 26 versehenen Grundkörper 24 werden von Abschlußplatten 34 übergriffen, welche ebenfalls in den Trennflächen 30 an dem Lagerhauptkörper 20 anliegen und mit Schrauben 36 an dem Lagerhauptkörper befestigt werden. In den Abschlußplatten 34 sind Kammern 38 ausgebildet, welche jeweils einen Grundkörper 24 mit zwei Deckelkörpern 26 aufnehmen und derart formschlüssig umgreifen, daß die Deckelkörper 26 an den Grundkörpern 24 befestigt sind. An den Grundkörpern 24 sind kreissegmentförmige Vorsprünge 40 angebracht, welche in die Rücklaufführungen aufnehmenden Bohrungen, z.B. A29 und B29 in Figur 1, eingreifen und zwischen sich den Rollen 14 Durchgang gewähren. Damit ist der exakte Anschluß der Bogenführungen an die Rücklaufführungen gewährleistet.

Aus Figuren 1 und 2 erkennt man, daß an den Abschlußplatten 34 Dichtplatten 44 befestigt werden, und zwar mittels Schrauben 46. Diese Dichtplatten 44 folgen dem Umriß der Führungsschiene 10 gemäß Figur 1 und stoßen an den Enden von in Längsrichtung der Führungsschiene verlaufenden Längsdichtungsleisten 48 an.

Figuren 2 und 3 lassen erkennen, daß jeweils zwei Grundkörper 24 mit je zwei Deckelkörpern 26 und einer Abschlußplatte 34 und einer Dichtplatte 44 eine Endeinheit 50 bilden. Das Profil der Dichtplatte 44 zur Anlage an der Führungsschiene 10 ist in Figur 9 dargestellt. Man erkennt, daß zwei Anlagezungen 44a,44b vorgesehen sind. Die Dichtplatte 44 kann insgesamt aus dichtendem Werkstoff bestehen oder aus einem härteren Werkstoff mit einem eingebetteten Dichtrand.

Zur Figur 1 ist noch nachzutragen, daß die Rollen der lastübertragenden Rollenreihen AI und B1 - wie aus Figuren 1 und la ersichtlich - von Halteprofilen 16b u. 12e der Stützleistenanordnung 16 bzw. des Führungswagens 12 übergriffen sind, so daß die Rollen 14 auch dann am Führungswagen 12 unverlierbar festgehalten sind, wenn der Führungswagen 12 von der Führungsschiene 10 getrennt ist.

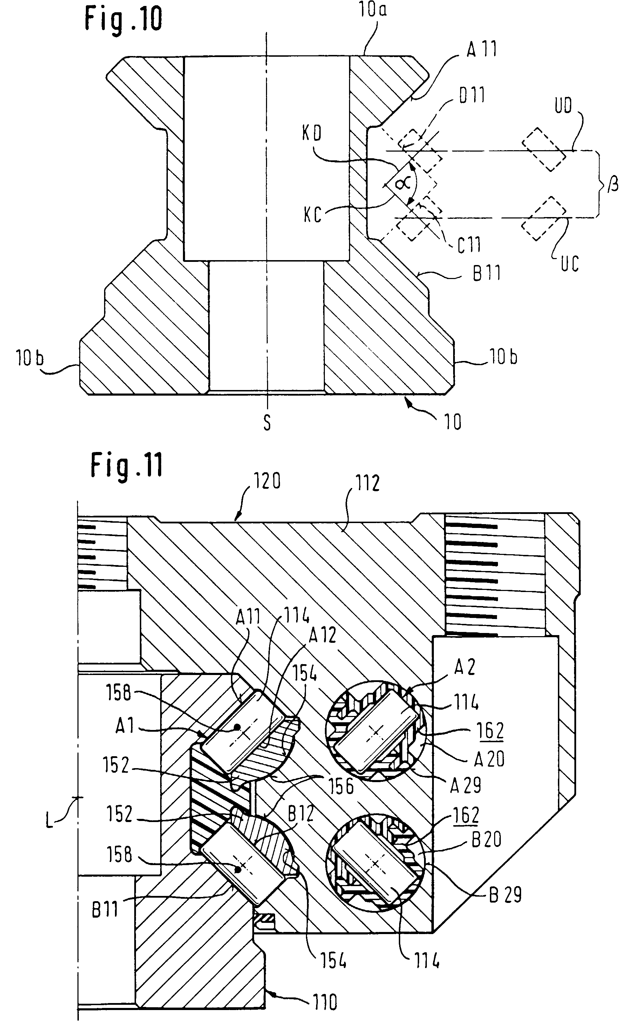

In Figur 10 erkennt man das Profil einer Führungsschiene 10 mit der Kopffläche 10a, den Seitenflächen 10b und den lastaufnehmenden Rollenlaufbahnen All und B11. Die Laufbahnen All und B11 konvergieren zu der Mittelebene S hin. Grundsätzlich wäre es aber auch möglich, an der Führungsschiene 10, wie in Figur 10 gestrichelt eingezeichnet, zwei lastaufnehmende Rollenlaufbahnen C11 und D11 anzuformen, was dann selbstverständlich eine Umkonstruktion des Führungswagens erfordern würde. Zu beachten ist aber, daß auch in diesem Fall die Umlaufebenen UD und UC miteinander den Winkel Null einschließen und die Kraftübertragungsebenen KC und KD wieder einen Winkel α von 90° einschließen, so daß auch hier die Winkelbedingung erfüllt ist, daß β kleiner ist als α.

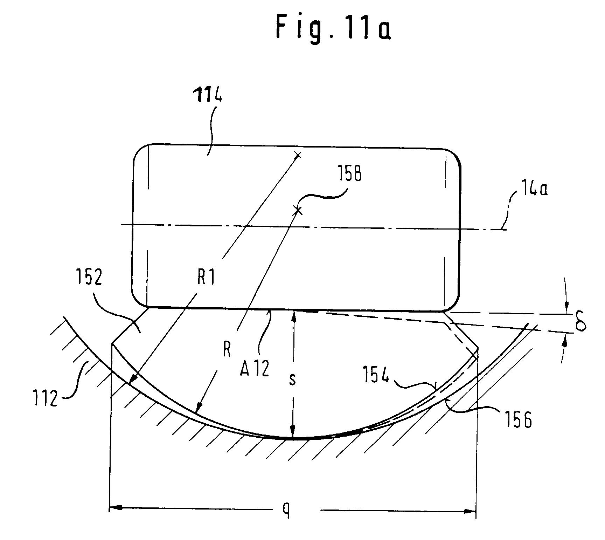

Die Ausführungsform der Figuren 11,12 und 13 entspricht hinsichtlich der Geometrie der Rollenumläufe der Ausführungsform nach den Figuren 1 bis 9. Zum Unterschied zu der Ausführungsform nach den Figuren 1 bis 9 sind die lastaufnehmenden Rollenlaufbahnen A12 und B12 bei dieser Ausführungsform nicht unmittelbar an dem Material des Führungswagens 112 ausgebildet, sondern an Einsätzen 152, welche mit konvexen Lagerflächen 154 in konkaven Lagerflächen 156 des Führungswagens 112 um Schaukelachsen 158 schaukelnd gelagert sind, so daß sich die lastaufnehmenden Laufbahnen A12 und B12 zwangsläufig parallel zu den lastaufnehmenden Rollenlaufbahnen A11 und B11 der Führungsschiene 110 einstellen und damit den Rollen 14 annähernd auf der ganzen Länge auf deren Umfangsflächen anliegen.

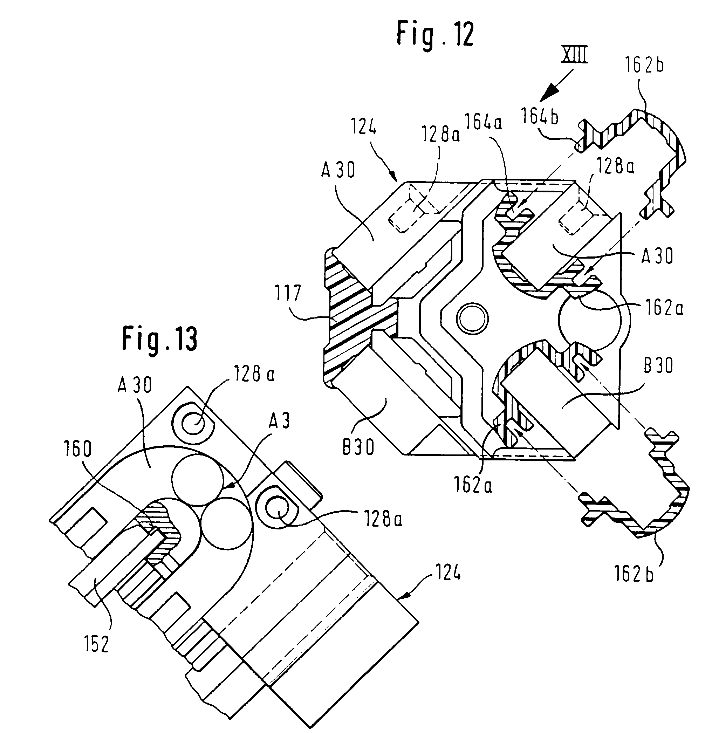

Die Einsätze 152 greifen - wie aus Figur 13 ersichtlich - in Ausnehmungen 160 der Grundkörper 124 mit Schaukelspiel ein, so daß die Einsätze 152 auch schon vor dem Einbringen der Rollen 14 an dem Führungswagen 112 gehalten sind.

In weiterer Abweichung von der Ausführungsform 1 bis 9 sind in der Ausführungsform nach den Figuren 11 bis 13 die Rücklaufführungen A20 und B20 in Bohrungen A29 und B29 ausgebildet, welche die Rollen 114 voll umschließen und Führungsauskleidungen 162 aufnehmen. Die Führungsauskleidungen 162 bestehen - wie aus Figur 12 ersichtlich - aus Teilschalen 162a und 162b. Die Teilschalen 162a sind dabei an den Grundkörpern 124 einstückig angeformt und erstrecken sich jeweils über die halbe Länge des Hauptkörpers 120. Die Teilschale 162b erstreckt sich dagegen über die ganze Länge des Hauptkörpers 120. Die Teilschalen 162a und 162b sind durch Steckleisten 164b und Stecknuten 164a formschlüssig zusammensetzbar.

Die Ausbildung der Rücklaufführungen A20 ist nicht an das Vorhandensein eines Einsatzes 152 gebunden. Man könnte den Einsatz 152 auch bei der Ausführungsform nach den Figuren 1 bis 9 in Verbindung mit den dortigen Rücklaufführungen A20 anwenden. Ebenso könnte man die Rücklaufführung nach den Abbildungen 11 bis 13 bei der Ausführungsform nach den Figuren 1 bis 9 anwenden unter Beibehaltung der dortigen Ausbildung der lastaufnehmenden Laufbahn A12.

Das Einführen der Rollen geschieht, nachdem die Grundkörper 24 gemäß Figur 2 an der Trennfläche 30 anliegen und bevor die Deckelkörper 26 an den Grundkörpern 24 angelegt werden. Danach werden die Abschlußplatten 34 montiert.

Der Hauptkörper 20 ist gemäß Figur 1 mit einem Schmierölversorgungssystem 70 ausgeführt (Figur 1). Durch dieses Schmierölversorgungssystem kann ein Ölkissen 72 zwischen der Kopffläche 10a und der gegenüberstehenden Fläche 12f des Führungswagens 12 aufrecht erhalten werden. Dieses Schmierölkissen sorgt für eine Dämpfung von vertikalen Schwingungen in der Ausführungsform nach Figur 1. Das Schmierölkissen kann auch in einem Spalt 74 gemäß Figur 1 aufrecht erhalten werden, so daß auch horizontale Schwingungen in Figur 1 gedämpft sind. Die die Schmierölkissen aufnehmende Spalte kann auf eine Spaltbreite von 5μ bis 100μ eingestellt werden.

An das Schmierölversorgungssystem 70 schließen auch - wie aus Figur 4 ersichtlich - Schmieröl leitungen 76 und 78 an, welche der Schmierölversorgung der Rollenumläufe dienen. Das Schmierölversorgungssystem ist mit einer Mehrzahl von Anschlußstellen 80a, 80b, 80c,80d und 80e versehen, so daß je nach Einbauverhältnissen die Schmierölversorgung optimal angelegt werden kann (Figur 2).

Das Verhältnis der Rollenlänge zum Rollendurchmesser ist vorzugsweise gleich oder größer als 1,3 (Rollenlänge) :1 (Rollendurchmesser). Für den Fall, daß β nur geringfügig kleiner als α oder der Umlenkradius sehr groß ist, wäre auch ein Verhältnis von Rollenlänge zu Rollendurchmesser von 1:1 denkbar. Unter Umständen kann auch die Rollenlänge kürzer werden als der Rollendurchmesser.

Zur Ausbildung des Laufbahneinsatzes 152 wird nun noch verwiesen auf die vergrößerte Schnittdarstellung gemäß Figur 11a. Man erkennt dort wieder die Rollen 114 in Anlage an der lastaufnehmenden Laufbahn A12, die am Laufbahneinsatz 152 als plane Fläche ausgebildet ist. Der Laufbahneinsatz 152 liegt mit einer konvexen Lagerfläche 154 an der konkaven Lagerfläche 156 des Führungswagens 112 an. Der Krümmungsradius der konvexen Lagerfläche 154 ist mit R bezeichnet und der Krümmungsradius der konkaven Lagerfläche 156 mit R1. Der Krümmungsradius R1 ist größer als der Krümmungsradius R. Beispielsweise gilt:

$$1,005 < \frac{R1}{R} < 1,02$$

Bei der Montage kann sich der Laufbahneinsatz 152 durch Schaukeln um die Schaukelachse 158 so einstellen, daß - man betrachte nun wieder die Figur 11 - die lastaufnehmende Laufbahn A12 des Laufbahneinsatzes 152 exakt parallel zu der lastaufnehmenden Laufbahn A11 der Führungsschiene 110 ist.

Man erkennt in Figur 11a weiter, daß - in dem dort dargestellten Schnitt - der Querschnitt des Laufbahneinsatzes 152 länglich ist, so daß eine Verbiegung des Querschnitts möglich ist in dem Sinn, daß sich der Krümmungsradius R der konvexen Lagerfläche 154 an den Krümmungsradius R1 der konkaven Lagerfläche 156 annähert. Diese Annäherung kann beispielsweise dann eintreten, wenn nach erfolgtem Zusammenbau eine Belastung des Lagers eintritt, aus Selbsthemmungsgründen eine schaukelnd-gleitende Anpassung des Laufbahneinsatzes 152 aber nicht stattfinden kann, weil die konvexe Lagerfläche 154 an der konkaven Lagerfläche 156 mit Selbsthemmung reibend anliegt. Hier sorgt also dann die Verbiegemöglichkeit des Laufbahneinsatzes 152 für eine annähernde Parallelstellung der Laufbahn A12 zur Laufbahn All. Dies gilt beispielsweise dann, wenn sich in Figur 11 der Führungswagen 112 unter Last gegenüber der Führungsschiene 110 aufspreizt.

Noch ein weiterer Vorteil ist mit der elastischen Verformbarkeit des Laufbahneinsatzes 152 verbunden:

Es ist eine bekannte Tatsache, daß eine Rolle, die zwischen zwei ebenen Flächen unter Last steht, an ihren Enden mit größerer Flächenpressung an den anliegenden Flächen anliegt als in ihrem Mittelbereich. Wenn nun der Laufbahneinsatz 152 elastisch verformbar ist im Sinne einer Annäherung des Krümmungsradius R an den Krümmungsradius R1, so kann an den Enden der Rolle 14 die Laufbahn A12 um den Winkel δ ausweichen. Damit kommt es zu einer Vergleichmäßigung der Flächenpressung zwischen Rolle 14 und Laufbahneinsatz 152 über die ganze Querschnittslänge q gemäß Figur 11a.

Das Verhältnis der Querschnittshöhe s zur Querschnittslänge q des Einsatzes 152 liegt zwischen 0,2 und 0,8, vorzugsweise zwischen 0,25 und 0,5.

Zum Stand der Technik ist auf die DE-C- 30 34 008 zu verweisen, wo bei einem Drehlager bereits Laufbahneinsätze ähnlicher Querschnittsform vorgesehen sind (siehe insbesondere Figur 3, position 21). Dabei ist aber die konvexe Lagerfläche des Laufbahneinsatzes in ihrem Krümmungsradius exakt dem Krümmungsradius einer konkaven Lagerfläche des jeweiligen Drehkörpers angepaßt.

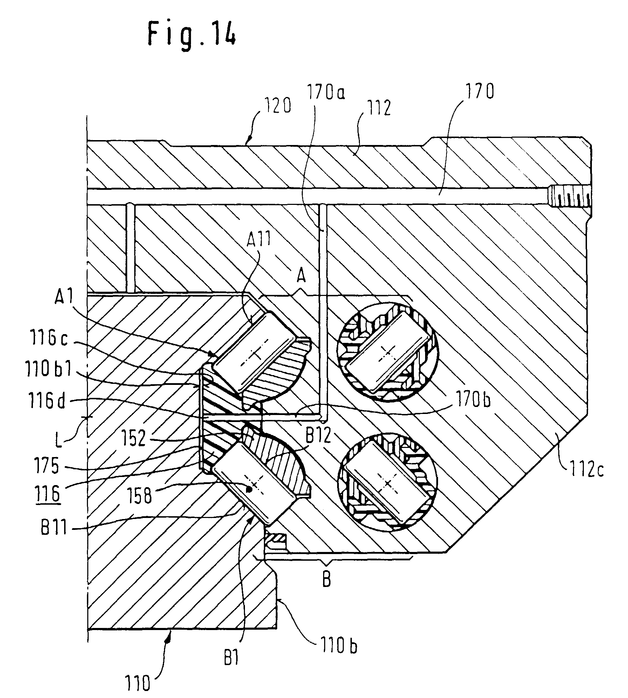

In Fig. 14 erkennt man im wesentlichen den Aufbau wieder, der in Fig. 11 dargestellt ist. Der Schnitt ist jedoch in eine andere zur Längsachse L wiederum orthogonale Ebene verlegt. Man erkennt dort die Stützleistenanordnung 116 wieder, welche die Rollenreihen A1 und B1 an dem Führungswagen 112 abstützt. Diese an dem Führungswagen 112 fest angeordnete Stützleistenanordnung 116 besitzt eine Seitenfläche 116c, welche zusammen mit einem Bereich 110b1 der Seitenfläche 110b der Führungsschiene 110 ein Schmiermittelkissen 175 bildet. Dieses Schmiermittelkissen 175 ist an das Schmierölversorgungssystem 170 über Kanäle 170a und 170b des Hauptkörpers 120 des Führungswagens 112 sowie eine Bohrung 116d der Stützleistenanordnung 116 verbunden.

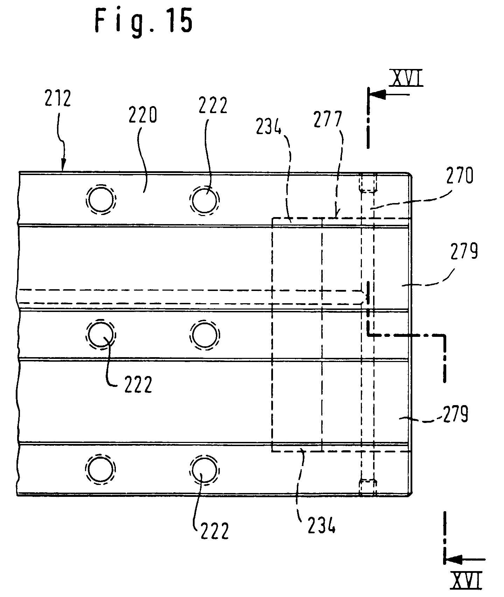

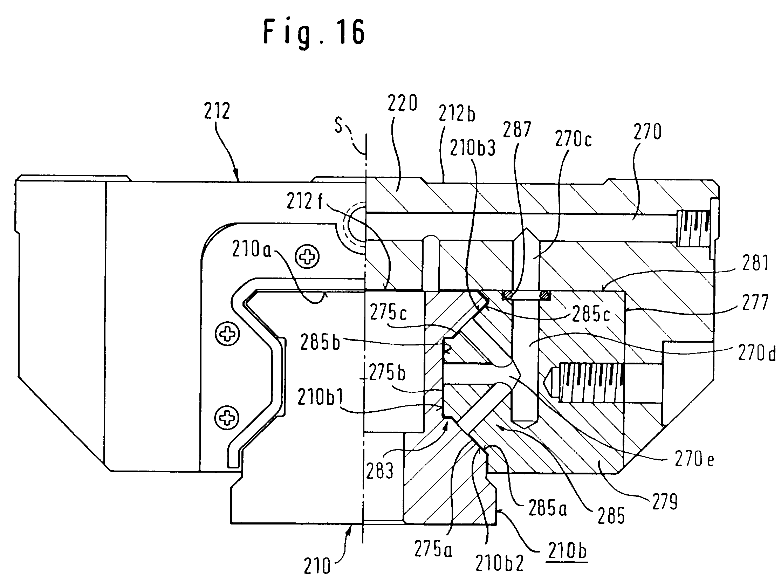

Die Ausführungsform der Fig. 15 und 16 ist von der Ausführungsform nach Fig. 1 - 3 abgeleitet. Der Hauptkörper 220 des Führungswagens 212 ist hier an seinen Enden beidseits der Führungsschiene 210 mit je einer Aufnahmekammer 277 ausgeführt, die nach oben durch den bis zum Ende des Führungswagens 212 fortgesetzten Stegteil 212b begrenzt sind. In diese Kammern 277 sind zum einen die Abschlußplatten 234 eingesetzt, welche genauso wie in Fig. 2 und 3 die mit den Deckelkörpern 26 verbundenen Grundkörper 24 aufnehmen (siehe Fig. 2 und 3). Darüber hinaus ist in jeder dieser Aufnahmekammern 277 je ein Führungsschuh 279 aufgenommen. Die Führungsschuhe 279 liegen, wie aus Fig. 16 ersichtlich, nach oben an Kammerbegrenzungsflächen 281 an, welche in der gleichen Ebene liegen wie die innere Begrenzungsfläche 212f des Stegteils 212b. Die Führungsschiene 210 weist ein trapezförmiges Hohlprofil 283 auf, welches von den Flächenbereichen 210b1, 210b2 und 210b3 der Seitenfläche 210b gebildet ist. Jeder Führungsschuh 279 weist ein komplementäres Trapezprofil 285 auf, welches von Flächen 285a, 285b und 285c definiert ist. Die Flächen 210b2, 210b1, 210b3 liegen an den Flächen 285a, 285b bzw. 285c an und definieren Schmiermittelkissen 275a, 275b und 275c. Diese Schmiermittelkissen 275a, 275b, 275c werden von der zentralen Schmierölversorgung 270 aus über eine Bohrung 270c im Stegteil 212b, eine Bohrung 270d im Führungsschuh 279 und ein frei verzweigtes Bohrungssystem 270e des Führungsschuhs 279 versorgt.

An dem Übergang von der Bohrung 270c zu der Bohrung 270d ist zu Dichtzwecken ein O-Ring 287 vorgesehen.

Man erkennt,daß diese Führungsschuhanordnung, die zu beiden Seiten der Längsmittelebene S und an beiden Enden des Führungswagens 212 vorgesehen sein kann, eine Dämpfung von Schwingungen in Querrichtung, in vertikaler Richtung und auch von Drehschwingungen gestattet.

Bei allen Ausführungsformen der Erfindung ergibt sich eine besonders einfache Methode der Montage. Dies sei unter Hinweis auf die Figuren 2 bis 7 erläutert: Man baut in den Hauptkörper 20 zunächst die Stützleistenabschnitte 17 mit den Grundkörpern 24 ein, so daß diese die endgültige Betriebslage an dem Hauptkörper 20 einnehmen. Die Deckelkörper 26 sind dabei von den Grundkörpern 24 noch getrennt. Die Rollen 14 können dann in die Bogenführungen A30 der noch offenen Grundkörper 24 eingesetzt und nach und nach über die ganze Länge der Rollenumläufe verteilt werden. Erst wenn sämtliche Rollen 14 der Rollenumläufe eingesetzt sind, werden die Deckelkörper 26 auf die Grundkörper 24 aufgesetzt, wobei die Positionierungszapfen 28 der Deckelkörper 26 in die Positionierungslöcher 28a eingeschoben werden. Dieser Vorgang ist in Figur 4a dargestellt. In Figur 4a ist mit 26b die Richtung angedeutet, in welcher der Deckelkörper 26 bei der Endmontage an den Grundkörper 24 herangeführt und an diesen aufgesetzt wird. Die Deckelkörper 26 können dabei an dem Grundkörper 24 durch eine Schnappverbindung gesichert werden oder durch eine Schraubverbindung. Unter Umständen genügt es auch, die Deckelkörper 30 an dem Grundkörper 24 einfach durch die Zapfen 28 zu positionieren und die Befestigung allein durch die Abschlußplatten 34 vorzunehmen, die nach Anbringung der Deckelkörper 26 an dem Hauptkörper 20 durch die Schrauben 36 an dem Hauptkörper 20 befestigt werden und durch ihre Kammern 38 den Grundkörper 24 und die Deckelkörper 26 zusammenhalten können.

Diese Art der Montage ist deshalb von besonderem Interesse, weil die Rollen 14, wie aus Figur 1 zu ersehen, durch die Profile 12e und 16b gegen Herausfallen gesichert sind, so daß ein Einlegen der Rollen im Bereich der lastübertragenden geradlinigen Rollenreihen A1 (siehe Figur 1) nicht oder nur mit Schwierigkeiten möglich ist. Der Führungswagen kann somit in Abwesenheit der Schiene 10 vollständig fertiggestellt werden, wobei ein Verlust der Rollen 14 auch vor dem Zusammenbau des Führungswagens mit der Schiene nicht zu befürchten ist.

Bevorzugt liegen innerhalb der Rollenumläufe A die Rollen 14 unmittelbar aneinander an ohne dazwischenliegende Distanzkörper.

**Patentansprüche**

1. Wälzlager für Linearbewegungen, umfassend eine Führungsschiene (10) mit einer Längsachse (L), einen Führungswagen (12) sowie mindestens einen Wälzkörperumlauf (A) zur Führung des Führungswagens (12) auf der Führungsschiene (10),

   wobei der mindestens eine Wälzkörperumlauf (A) eine geradlinige lastübertragende Wälzkörperreihe (A1) in Eingriff mit einer zur Längsachse (L) der Führungsschiene (10) parallelen lastaufnehmenden Laufbahn (A12) des Führungswagens (12) und einer zur Längsachse (L) der Führungsschiene (10) parallelen lastaufnehmenden Laufbahn (A11) der Führungsschiene (10), eine im wesentlichen geradlinige, rücklaufende Wälzkörperreihe (A2) in einer Rücklaufführung (A20) des Führungswagens (12) und zwei Bogenwälzkörperreihen (A3) in Bogenführungen (A30) des Führungswagens (12) umfaßt und
   wobei der Führungswagen (12) gegenüber der Führungsschiene (10) durch mindestens ein Schmiermittelkissen (72,74) schwingungsgedämpft ist,

   dadurch gekennzeichnet,
   daß das Schmiermittelkissen (72,74) zwischen dem Führungswagen (12) selbst und der Führungsschiene (10) angeordnet ist.

2. Wälzlager nach Anspruch 1,
   dadurch gekennzeichnet,
   daß bei U-förmiger Ausführung des Führungswagens (12) mit einem einer Kopffläche (10a) der Führungsschiene (10) gegenüberliegenden Stegteil (12b) und zwei je einer Seitenfläche (10b) der Führungsschiene (10) gegenüberstehenden Schenkelteilen (12c) das Schmiermittelkissen (72,74) zwischen mindestens einer der Paarungen Kopffläche (10a) - Stegteil (12b) und Seitenfläche (10b) - Schenkelteil (12c) vorgesehen ist.

3. Wälzlager nach Anspruch 2,
   dadurch gekennzeichnet,
   daß Schmiermittelkissen (72,74) zwischen der Kopffläche (10a) der Führungsschiene (10) und einer der Kopffläche (10a) gegenüberstehenden Innenfläche (12f) des Stegteils (12b) und ferner zwischen sich gegenüberstehenden, an die Kopffläche (10a) bzw. die Innenfläche (12f) angrenzenden Schrägflächen der Führungsschiene (10) und des Stegteils (12b) vorgesehen sind.

4. Wälzlager nach einem der Ansprüche 2 und 3,
   dadurch gekennzeichnet,
   daß bei Vorhandensein zweier Wälzkörperumläufe (A,B) in mindestens einem Schenkelteil (112c) des U-förmigen Führungswagens (112) mit zwei jeweils einem Wälzkörperumlauf (A,B) zugehörigen lastübertragenden Wälzkörperreihen (A1,B1) ein Schmiermittelkissen (175) zwischen den lastübertragenden Wälzkörperreihen (A1,b1) durch die Führungsschiene (110) und einen Teil (116) des Führungswagens (112) gebildet ist.

5. Wälzlager nach Anspruch 4,
   dadurch gekennzeichnet, daß ein Schmiermittelkissen (175) zwischen der Führungsschiene (110) und einer Stützleistenanordnung (116) gebildet ist, welche der Stützung der lastübertragenden Wälzkörperreihen (A1,B1) an dem Führungswagen (112) dient.

6. Wälzlager nach Anspruch 2,
   dadurch gekennzeichnet,
   daß an dem U-förmigen Führungswagen (212), und zwar in dessen außerhalb der Wälzkörperumläufe gelegenen Endbereichen, Führungsschuhe (279) angebracht sind, welche zusammen mit den Seitenflächen (210b) der Führungsschiene (210) jeweils mindestens ein Schmiermittelkissen (275a,275b, 275c) bilden.

7. Wälzlager nach Anspruch 6,
   dadurch gekennzeichnet,
   daß bei Ausführung einer Seitenfläche (210b) der Führungsschiene (210) mit einem Trapezprofil (283) der Führungsschuh (279) ein komplementäres Trapezprofil (285) aufweist und daß Schmiermittelkissen (275a,275b,275c) zwischen jeweils mindestens drei Begrenzungsflächen (210b2, 210b1,210b3;285a,285b, 285c) beider Trapezprofile (283,285) ausgebildet sind.

8. Wälzlager nach einem der Ansprüche 6 und 7, dadurch gekennzeichnet, daß die Führungsschuhe (279) innerhalb eines Hauptkörpers (220) des Führungswagens (212) in Ausnehmungen (277) dieses Hauptkörpers (220) untergebracht sind.

9. Wälzlager nach Anspruch 8, dadurch gekennzeichnet, daß die Führungsschuhe (279) innerhalb Ihrer Ausnehmungen (277) an Begrenzungflächen (281) dieser Ausnehmungen (277) anliegen, welche bündig mit einer der Kopffläche (210a) der Führungsschiene (210) gegenüberliegenden Innenfläche (212f) des Stegteils (212b) sind.

10. Wälzlager nach einem der Ansprüche 1 - 9, dadurch gekennzeichnet, daß das Schmiermittelkissen (72,74) ein Schmieröölkissen ist.

11. Wälzlager nach einem der Ansprüche 1 - 10, dadurch gekennzeichnet, daß das Schmiermittelkissen (72,74) zwischen Flächen (10a,12f) ausgebildet ist, deren Abstand ca. 5 µ bis ca. 100 µ beträgt.

12. Wälzlager nach einem der Ansprüche 1 - 11, dadurch gekennzeichnet, daß das Schmiermittel des Schmiermittelkissens (72,74) unter Druck steht.

13. Wälzlager nach einem der Ansprüche 1 - 12, dadurch gekennzeichnet, daß das Schmiermittel des Schmiermittelkissens (72,74) von einem Schmiermittelversorgungssystem (70) bereitgestellt ist, welches auch der Schmiermittelversorgung des mindestens einen Wälzkörperumlaufs (A) dient.

14. Wälzlager nach einem der Ansprüche 1 - 13, dadurch gekennzeichnet, daß die Wälzkörper (14) des mindestens einen Wälzkörperumlaufs (A) als zylindrische Rollen (14) ausgebildet sind.

15. Wälzlager nach einem der Ansprüche 1 - 14, angewandt auf eine Bauart des Wälzlagers, bei der dieses eine Führungsschiene (10) mit einer Längsachse (L), zwei Seitenflächen (10b), einer Kopffläche (10a) und einer Mittelebene (S) zwischen den beiden Seitenflächen (10b) umfaßt, ferner einen U-förmigen Führungswagen (12) mit einem parallel zu einer Stegebene (E-E) verlaufenden, der Kopffläche (10a) der Führungsschiene (10) gegenüberstehenden Steg (12b) und mit den Seitenflächen (10b) der Führungsschiene (10) benachbarten Schenkeln (12c) umfaßt und ferner

eine Mehrzahl von Wälzkörperumläufen (A,B) zur Führung des Führungswagens (12) auf der Führungsschiene (10) umfaßt, wobei auf mindestens einer Seite der Mittelebene (S) zwei Wälzkörperumläufe (A,B), nämlich Rollenumläufe, angeordnet sind, wobei weiter jeder der beiden Rollenumläufe (A,B) mit Rollen (14) mit einer Rollenachse (14a), einer Rollenumfangsfläche (14b), in Achsrichtung beabstandeten Rollenendflächen (14c) und einem auf der Rollenachse (14a) in der Mitte zwischen den beiden Endflächen (14c) liegenden Rollenmittelpunkt (14d) ausgeführt ist, wobei weiter jeder Rollenumlauf (A,B) eine geradlinige lastübertragende Rollenreihe (A1,B1) in Eingriff mit einer zur Längsachse (L) der Führungsschiene (10) parallelen lastaufnehmenden Laufbahn (A12,B12) des Führungswagens (12) und einer zur Längsachse (L) der Führungsschiene (10) parallelen lastaufnehmenden Laufbahn (A11,B11) der Führungsschiene (10), eine im wesentlichen geradlinige, rücklaufende Rollenreihe (A2,B2) in einer Rücklaufführung (A20,B20) des Führungswagens (12) und zwei Bogenrollenreihen (A3) in Bogenführungen (A30) des Führungswagens (12) umfaßt, wobei weiter die Rollenachsen (14a) sämtlicher Rollen (14) eines jeden Rollenumlaufs (A,B) zueinander parallel angeordnet sind, wobei weiter die beiden Rollenumläufe (A,B) je eine Umlaufebene (UA,UB) definieren, welche die Mittelpunkte (14d) der Rollen (14) der lastübertragenden Rollenreihe (A1,B1) und der rücklaufenden Rollenreihe (A2,B2) des jeweiligen Rollenumlaufs (A,B) annähernd enthält, wobei weiter die Rollen (14) der jeweiligen lastübertragenden Rollenreihe (A1,B1) eines jeden Rollenumlaufs (A,B) eine Kraftübertragungsebene (KA,KB) definieren, welche auf den Rollenachsen (14a) der Rollen (14) der lastübertragenden Rollenreihe (A1,B1) senkrecht steht und die Mittelpunkte (14d) der Rollen (14) dieser lastübertragenden Rollenreihe (A1,B1) enthält, wobei weiter die Umlaufebenen (UA,UB) und die Kraftübertragungsebenen (KA,KB) beider Rollenumläufe (A,B) zur Längsachse (L) der Führungsschiene (10) parallel sind, wobei weiter die Kraftübertragungsebenen (KA,KB) der lastübertragenden Rollenreihen (A1,B1) beider Rollenumläufe (A,B) miteinander einen ersten Winkel ($\alpha$) einschließen und die Umlaufebenen (UA,UB) beider Rollenumläufe (A,B) miteinander einen zweiten Winkel (β) einschließen,

wobei weiter die Projektionen der beiden Rollenumläufe (A,B) in Richtung der Längsachse (L) verschneidungsfrei sind,

wobei weiter die beiden Rollenumläufe (A,B) in Richtung senkrecht zur Stegebene (E-E) übereinander angeordnet sind,

wobei weiter die rücklaufenden Rollenreihen (A2,B2) beider Rollenumläufe (A,B) von der Mittelebene (S) der Führungsschiene (10) weiter entfernt sind als die lastübertragenden Rollenreihen (A1,B1) beider Rollenumläufe (A,B), wobei weiter in jedem der Rollenumläufe (A,B) die Rollen (14) der rücklaufenden Rollenreihe (A2,B2) gegenüber den Rollen (14) der lastübertragenden Rollenreihe (A1,B1) in Richtung der Rollenachsen (14a) des jeweiligen Rollenumlaufs (A,B) um eine jeweilige Versatzstrecke (V) versetzt sind und aufeinanderfolgende Rollen (14) beider Bogenrollenreihen (A3) des jeweiligen Rollenumlaufs (A,B) relativ zueinander um jeweilige Einzelversatzstrecken in Richtung der jeweiligen Rollenachsen (14a) gegeneinander versetzt sind, deren über die jeweilige Bogenrollenreihe gebildete Summe der jeweiligen Versatzstrecke (V) entspricht, und wobei die Versatzrichtung der rücklaufenden Rollenreihen (A2,B2) gegenüber den lastübertragenden Rollenreihen (A1,B1) beider Rollenumläufe (A,B) derart gewählt ist, daß der zweite Winkel (β) kleiner ist als der erste Winkel (α).

16. Wälzlager nach Anspruch 15,
dadurch gekennzeichnet,
daß der von den Umlaufebenen (UA,UB) beider Rollenumläufe (A,B) miteinander eingeschlossene Winkel (β) Null ist, daß die lastübertragenden Rollenreihen (A1,B1) beider Rollenumläufe (A,B) in Richtung senkrecht zur Stegebene (E-E) übereinander liegen und daß die rücklaufenden Rollenreihen (A2,B2) beider Rollenumläufe (A,B) in Richtung senkrecht zur Stegebene (E-E) ebenfalls übereinander liegen.

17. Wälzlager nach einem der Ansprüche 15 und 16,
dadurch gekennzeichnet,
daß sich die beiden Rollenumläufe (A,B) in Längsrichtung des Führungswagens (12) über gleiche Längen erstrecken.

18. Wälzlager nach einem der Ansprüche 15 - 17,
dadurch gekennzeichnet,
daß die Kraftübertragungsebenen (KA,KB) der lastübertragenden Rollenreihen (A1,B1) beider Rollenumläufe (A,B) miteinander einen ersten Winkel (α) von ca. 90° einschließen.

19. Wälzlager nach einem der Ansprüche 15 - 18,
dadurch gekennzeichnet,
daß zu beiden Seiten der Mittelebene (S) je zwei Rollenumläufe (A,B) angeordnet sind.

20. Wälzlager nach einem der Ansprüche 15 - 19,
dadurch gekennzeichnet,
daß die Rollenumläufe (A,B) auf der einen und auf der anderen Seite der Mittelebene (S) in bezug auf die Mittelebene (S) zueinander im wesentlichen symmetrisch angeordnet sind.

21. Wälzlager nach einem der Ansprüche 15 - 20,
dadurch gekennzeichnet,
daß die Bogenführung (A30) einer Bogenrollenreihe (A3) mit mindestens einer den Rollenumfangsflächen (14b) dieser Bogenrollenreihe (A3) anliegenden inneren Bogenrollenlaufbahn (A32), mindestens einer den Rollenumfangsflächen (14b) dieser Bogenrollenreihe (A3) anliegenden äußeren Bogenrollenlaufbahn (A31) und zwei den Rollenendflächen (14c) dieser Bogenrollenreihe (A3) gegenüberstehenden Bogenrollenstützbahnen (A33, A34) ausgeführt ist, daß die Rücklaufführung (A20) der zugehörigen rücklaufenden Rollenreihe (A2) mit mindestens einer inneren, den Rollenumfangsflächen (14b) dieser rücklaufenden Rollenreihe (A2) anliegenden Rücklaufrollenlaufbahn (A22), mindestens einer den Rollenumfangsflächen (14b) dieser rücklaufenden Rollenreihe (A2) anliegenden äußeren Rücklaufrollenlaufbahn (A21) und mit den Rollenendflächen (14c) dieser rücklaufenden Rollenreihe (A2) gegenüberliegenden Rücklaufrollenstützbahnen (A23,A24) ausgeführt ist, daß den Rollenendflächen (14c) der zugehörigen lastübertragenden Rollenreihe (A1) Lastrollenstützbahnen (A13,A14) gegenüberliegen, daß die innere Bogenrollenlaufbahn (A32) an die lastaufnehmende Laufbahn (A12) des Führungswagens (12) und an die innere Rücklaufrollenlaufbahn (A22) anschließt, daß die äußere Bogenrollenlaufbahn (A31) an die lastaufnehmende Laufbahn (All) der Führungsschiene (10) und an die äußere Rücklaufrollenlaufbahn (A21) anschließt und daß jede der Bogenrollenstützbahnen (A33,A34) an je eine Rücklaufrollenstützbahn (A23,A24) und je eine Lastrollenstützbahn (A13,A14) anschließt.

22. Wälzlager nach einem der Ansprüche 15 - 21,
dadurch gekennzeichnet,
daß wenigstens eine geradlinige lastübertragende Rollenreihe (A1) und die zugehörige im wesentlichen geradlinige rücklaufende Rollenreihe (A2) in einer Hauptkörpereinheit (20) des Führungswagens (12) angeordnet sind und daß wenigstens eine zugehörige Bogenführung (A30) in einer Endeinheit (50) des Führungswagens (12) ausgebildet ist.

**23.** Wälzlager nach Anspruch 22,
dadurch gekennzeichnet,
daß die Endeinheit (50) in einer zur Längsachse (L) im wesentlichen senkrechten Trennebene (30) mit der Hauptkörpereinheit (20) verbunden ist.

**24.** Wälzlager nach einem der Ansprüche 21 - 23,
dadurch gekennzeichnet,
daß wenigstens eine geradlinige lastübertragende Rollenreihe (A1) und die zugehörige im wesentlichen geradlinige rücklaufende Rollenreihe (A2) in einer Hauptkörpereinheit (20) des Führungswagens (12) angeordnet sind und daß wenigstens eine zugehörige Bogenführung (A30) in einer Endeinheit (50) des Führungswagens (12) ausgebildet ist, wobei die Endeinheit (50) einen Grundkörper (24) und einen Deckelkörper (26) aufweist und wobei in dem Grundkörper (24) eine Bogenrollenstützbahn (A34) der Bogenrollenstützbahnen (A33,A34) und mindestens ein Teil der Bogenrollenlaufbahnen (A31,A32) ausgebildet sind und wobei an dem Dekkelkörper (26) zumindest die zweite Bogenrollenstützbahn (A33) ausgebildet ist.

**25.** Wälzlager nach Anspruch 24,
dadurch gekennzeichnet,
daß ein Grundkörper (24) der Endeinheit (50) für zwei Bogenführungen (A30,B30) gemeinsam ist und daß für jede Bogenführung (A30,B30) ein Dekkelkörper (26) an dem gemeinsamen Grundkörper (24) befestigt ist.

**26.** Wälzlager nach einem der Ansprüche 22 - 25,
dadurch gekennzeichnet,
daß an den Bogenrollenstützbahnen (A33, A34) Übergangsstützbahnabschnitte (A43,A44) tangential anschließen, welche tangential an die zugehörigen Rücklaufrollenstützbahnen (A23,A24) und die zugehörigen Lastrollenstützbahnen (A13,A14) anschließen und innerhalb der Endeinheit (50) untergebracht sind.

**27.** Wälzlager nach einem der Ansprüche 21 - 26,
dadurch gekennzeichnet,
daß von den Lastrollenstützbahnen (A13,A14) mindestens eine die Umfangsflächen (14b) der Rollen (14) einer lastübertragenden Rollenreihe (A1) derart übergreift, daß die Rollen (14) der lastübertragenden Rollenreihe (A1) bei Trennung von Führungsschiene (10) und Führungswagen (12) am Führungswagen (12) unverlierbar gesichert sind.

**28.** Wälzlager nach einem der Ansprüche 21 - 27,
dadurch gekennzeichnet,
daß einander benachbarte Lastrollenstützbahnen (A14,B14) von zwei Rollenumläufen (A,B) durch eine ihnen gemeinsame Stützleistenanordnung (16) gebildet sind.

**29.** Wälzlager nach einem der Ansprüche 22 - 27,
dadurch gekennzeichnet,
daß einander benachbarte Lastrollenstützbahnen (A14,B14) von zwei Rollenumläufen (A,B) durch eine ihnen gemeinsame Stützleistenanordnung (16) gebildet sind und daß diese Stützleistenanordnung (16) von zwei in Längsmitte der Hauptkörpereinheit (20) geteilten Stützleisten (17) gebildet ist, von denen jede mit einem Teil (24) einer Endeinheit (50) einstückig hergestellt ist.

**30.** Wälzlager nach einem der Ansprüche 15 - 29,
dadurch gekennzeichnet,
daß die lastaufnehmende Laufbahn (A12) mindestens eines Rollenumlaufs (A) von einem Einsatz (152) in dem Führungswagen (112) gebildet ist.

**31.** Wälzlager nach Anspruch 30,
dadurch gekennzeichnet,
daß der Einsatz (152) um eine zur Längsachse der Führungsschiene (110) parallele Schaukelachse (158) an dem Führungswagen (112) schaukelnd gelagert ist.

**32.** Wälzlager nach Anspruch 31,
dadurch gekennzeichnet,
daß der Einsatz (152) eine konvexe Lagerfläche (154) aufweist, welche in eine konkave Lagerfläche (156) des Führungswagens (112) eingreift.

**33.** Wälzlager nach Anspruch 32,
dadurch gekennzeichnet,
daß die konvexe Lagerfläche (154) einen kleineren Krümmungsradius besitzt als die konkave Lagerfläche (156).

**34.** Wälzlager nach einem der Ansprüche 30 - 33,
dadurch gekennzeichnet,
daß der Einsatz (152) an mindestens einem Ende in eine Ausnehmung (160) einer Endeinheit des Führungswagens (112) eingreift, welche am Ende einer Hauptkörpereinheit des Führungswagens (112) angebracht ist.

**35.** Wälzlager nach einem der Ansprüche 15 - 34,
dadurch gekennzeichnet,
daß mindestens eine Rücklaufführung (A20) von einer zylindrischen Bohrung (A29) des Führungswagens (12) gebildet ist, welche an zwei einander diametral gegenüberliegenden Umfangsbereichen durch im wesentlichen rechteckige Nischen (A28) erweitert ist, wobei der Durchmesser der Bohrung (A29) größer ist als der Durchmesser der Rollen (14) und kleiner als die axiale Länge der Rollen (14) und wobei die Nischen (A28) an den Endflächen (14c) der Rollen (14) und an Endabschnitten der Umfangsflächen (14b) der Rollen (14) anliegen.

36. Wälzlager nach Anspruch 35,
dadurch gekennzeichnet,
daß bei Ausführung des Führungswagens (12) mit einer Hauptkörpereinheit (20) und einer eine Bogenführung (A30) aufweisenden Endeinheit (50) die Endeinheit (50) im Bereich eines Endes der Bogenführung (A30) mit kreissegmentförmigen Fortsätzen (40) versehen ist, welche in die Bohrung (A29) eingreifen.

37. Wälzlager nach einem der Ansprüche 15 - 34,
dadurch gekennzeichnet,
daß mindestens eine Rücklaufführung (A20) von einer Führungsauskleidung (162) in einem Kanal (A29) des Führungswagens (112) gebildet ist.

38. Wälzlager nach Anspruch 37,
dadurch gekennzeichnet,
daß der Kanal (A29) von einer kreiszylindrischen Bohrung gebildet ist.

39. Wälzlager nach einem der Ansprüche 37 und 38,
dadurch gekennzeichnet,
daß bei Ausbildung des Führungswagens (112) mit einer Hauptkörpereinheit und mindestens einer an einem axialen Ende der Hauptkörpereinheit angebrachten Endeinheit wenigstens ein Teil (162a) der Führungsauskleidung einstückig mit einem Teil (124) einer Endeinheit ausgebildet ist.

40. Wälzlager nach einem der Ansprüche 37 - 39,
dadurch gekennzeichnet,
daß die Führungsauskleidung (162) in Längsrichtung geteilt ist.

41. Wälzlager nach einem der Ansprüche 25 - 40,
dadurch gekennzeichnet,
daß der Grundkörper (24) und die beiden Deckelkörper (26) an einem Ende der Hauptkörpereinheit (20) durch eine an der Hauptkörpereinheit (20) des Führungswagens (12) angebrachte Abschlußplatte (34) übergriffen sind.

42. Wälzlager nach Anspruch 41,
dadurch gekennzeichnet,
daß die Abschlußplatte (34) je einem Grundkörper (24) und zwei zugehörigen Deckelkörpern (26) zu beiden Seiten der Mittelebene (S) gemeinsam ist.

43. Wälzlager nach Anspruch 41 oder 42,
dadurch gekennzeichnet,
daß an der Abschlußplatte (34) eine dem Profil der Führungsschiene (10) angepaßte Dichtplatte (44) angebracht ist.

44. Wälzlager nach Anspruch 43,
dadurch gekennzeichnet,
daß an den beiden Enden des Führungswagens (12) angebrachte Dichtplatten(44) an je eine Längsdichtungsleiste (48) des Führungswagens (12) an beiden Seitenflächen (10b) der Führungsschiene (10) anschließen.

45. Wälzlager nach einem der Ansprüche 15 - 44,
dadurch gekennzeichnet,
daß zwischen mindestens einer der Kopffläche (10a) und der Seitenflächen (10b) der Führungsschiene (10) einerseits und einer dieser im engen Abstand gegenüberstehenden Fläche (12f) des Führungswagens (12) andererseits ein Schmiermittelkissen (72), insbesondere ein Ölkissen (72) vorgesehen ist.

46. Wälzlager nach Anspruch 45,
dadurch gekennzeichnet,
daß das Schmiermittelkissen (72) an ein Schmiermittelversorgungssystem (70) angeschlossen ist, welches auch der Schmiermittelversorgung mindestens eines Rollenumlaufs (A) dient.

47. Wälzlager nach Anspruch 46,
dadurch gekennzeichnet,
daß das Schmiermittelversorgungssystem (70) eine Mehrzahl von wahlweise an eine äußere Schmiermittelquelle anschließbaren Schmiermittelanschlüssen (80a bis 80e) besitzt.

48. Wälzlager nach einem der Ansprüche 15- 47,
dadurch gekennzeichnet,
daß die lastaufnehmenden Laufbahnen (A11,B11) von zwei Rollenumläufen (A,B) auf einer Seite der Führungsschiene (10) in einem zur Längsachse (L) senkrechten Querschnitt betrachtet zur Mittelebene (S) der Führungsschiene (10) hin konvergieren.

49. Wälzlager nach einem der Ansprüche 15 - 47,
dadurch gekennzeichnet,
daß die lastaufnehmenden Laufbahnen (C11,D11) von zwei Rollenumläufen auf einer Seite der Führungsschiene (10) in einem zur Längsachse senkrechten Querschnitt betrachtet zur Mittelebene (S) der Führungsschiene hin divergieren.

50. Wälzlager nach einem der Ansprüche 1 - 49, angewandt auf eine Banart des Wälzlagers, bei der dieses eine Führungsschiene (10) mit einer Längsachse (L), einen Führungswagen (12) sowie mindestens einen Rollenumlauf (A) zur Führung des Führungswagens (12) auf der Führungsschiene (10) umfaßt, wobei der mindestens eine Rollenumlauf (A) eine geradlinige lastübertragende Rollenreihe (A1) in Eingriff mit einer zur Längsachse (L) der Führungsschiene (10) parallelen lastaufnehmenden Laufbahn (A12) des Führungswagens (12) und einer zur Längsachse (L) der Führungsschiene (10) parallelen lastaufnehmenden Laufbahn (A11) der Führungsschiene (10), eine im wesentlichen geradlinige, rücklaufende Rollenreihe (A2) in einer Rücklaufführung des Führungswagens (12) umfaßt,

wobei weiter der Führungswagen (12) eine Hauptkörpereinheit (20) mit der Rücklaufführung (A20) und Endeinheiten (50) mit den Bogenführungen (A30) aufweist, wobei weiter die Rücklaufführung (A20) durch eine zylindrische, zur Längsachse (L) der Führungsschiene (10) im wesentlichen parallele Bohrung (A29) gebildet ist, in deren Umfangsfläche Nischen (A28) für die Aufnahme des Rollenumrisses eingearbeitet sind, wobei die zylindrische Bohrung (A29) mit einem Durchmesser ausgeführt ist, welcher größer ist als der Rollendurchmesser und kleiner ist als die axiale Rollenlänge, und wobei in der zylindrischen Bohrung (A29) in zwei einander diametral gegenüberliegenden Umfangsbereichen im wesentlichen rechteckige Nischen (A28) vorgesehen sind, welche den Endflächen (14c) der Rollen (14) und Endabschnitten von Umfangsflächen (14b) der Rollen (14) gegenüberliegen.

51. Wälzlager nach einem der Ansprüche 1 - 14, angewandt auf eine Bauart des Wälzlagers, bei der dieses eine Führungsschiene (110) mit einer Längsachse (L) einen Führungswagen (112) sowie mindestens einen Rollenumlauf (A) zur Führung des Führungswagens (112) auf der Führungsschiene (110) umfaßt,

wobei der mindestens eine Rollenumlauf (A) eine geradlinige lastübertragende Rollenreihe (A1) in Eingriff mit einer zur Längsachse der Führungsschiene (110) parallelen lastaufnehmenden Laufbahn (A12) des Führungswagens (112) und einer zur Längsachse der Führungsschiene (110) parallelen lastaufnehmenden Laufbahn (All) der Führungsschiene (110), eine im wesentlichen geradlinige, rücklaufende Rollenreihe (A2) in einer Rücklaufführung (A20) des Führungswagens (112) und zwei Bogenrollenreihen (A3) in Bogenführungen (A30) des Führungswagens (112) umfaßt, wobei weiter der Führungswagen (112) eine Hauptkörpereinheit mit der Rücklaufführung (A20) und Endeinheiten mit den Bogenführungen (A30) aufweist, wobei weiter die Rücklaufführung (A20) von einem zur Längsachse der Führungsschiene (110) im wesentlichen parallelen Kanal (A29) gebildet ist, welcher eine Führungsauskleidung (162) mit einem dem Rollenumriß angepaßten Innenquerschnitt aufweist, und wobei die Innenauskleidung (162) wenigstens zum Teil einstückig mit einem Grundkörper (124) einer Endeinheit ausgeführt ist, in welchem mindestens ein Teil der Bogenführung (A30) ausgebildet ist.

52. Wälzlager nach Anspruch 51, dadurch gekennzeichnet, daß die Führungsauskleidung (162) aus zwei Teilschalen (162a, 162b) zusammengesetzt ist, welche in zur Längsachse der Führungsschiene (110) parallelen Trennebenen zusammenstoßen.

53. Wälzlager nach einem der Ansprüche 51 und 52, dadurch gekennzeichnet, daß die Führungsauskleidung (162) annähernd in der Längsmitte des Lagerhauptkörpers geteilt ist und daß die beiden so gebildeten Abschnitte der Führungsauskleidung wenigstens zum Teil mit je einem Grundkörper (124) der beiden Endeinheiten einstückig ausgeführt sind.

54. Wälzlager nach Anspruch 53, dadurch gekennzeichnet, daß die Grundkörper (124) der beiden Endeinheiten mit je einer der halben Länge der Hauptkörpereinheit entsprechenden Teilschale (162a) ausgeführt sind und daß eine der vollen Länge der Hauptkörpereinheit entsprechende weitere Teilschale (162b) mit den beiden an den Grundkörpern (124) angebrachten Teilschalen (162a) zur Führungsauskleidung (162) zusammengesetzt ist.

55. Wälzlager nach einem der Ansprüche 1 - 54, angewendet auf eine Bauart des Wälzlagers, bei der dieses eine Führungsschiene (110) mit einer Längsachse (L), einen Führungswagen (112) sowie mindestens einen Rollenumlauf (A) zur Führung des Führungswagens (112) auf der Führungsschiene (110) umfaßt, wobei der mindestens eine Rollenumlauf (A) eine geradlinige lastübertragende Rollenreihe (A1) in Eingriff mit einer zur Längsachse (L) der Führungsschiene (110) parallelen lastaufnehmenden Laufbahn (A12) des Führungswagens (112) und einer zur Längsachse (L) der Führungsschiene (110) parallelen lastaufnehmenden Laufbahn (A11) der Führungsschiene (110), eine im wesentlichen geradlinige, rücklaufende Rollenreihe (A2) in einer Rücklaufführung (A20) des Führungswagens (112) und zwei Bogenrollenreihen (A3) in Bogenführungen (A30) des Führungswagens (112) umfaßt, wobei weiter die lastaufnehmende Laufbahn (A12) mindestens eines Rollenumlaufs (A) von einem Einsatz (152) in dem Führungswagen (112) gebildet ist, welcher um eine zur Längsachse (L) der Führungsschiene (110) parallele Schaukelachse (158) an dem Führungswagen (112) schaukelnd gelagert ist, wobei der Einsatz (152) eine konvexe Lagerfläche (154) aufweist, welche in eine konkave Lagerfläche (156) des Führungswagens (112) eingreift und wobei der Krümmungsradius (R) der konvexen Lagerfläche (154) kleiner ist als der Krümmungsradius (R1) der konkaven Lagerfläche (156).

56. Wälzlager nach Anspruch 55,
dadurch gekennzeichnet,
daß das Verhältnis (R1/R) des Krümmungsradius' (R1) der konkaven Lagerfläche (156) zum Krümmungsradius (R) der konvexen Lagerfläche (154) größer ist als 1,005 und kleiner als 1,02.

57. Wälzlager nach einem der Ansprüche 55 und 56,
dadurch gekennzeichnet,
daß der Querschnitt des Einsatzes (152) in Richtung der Rollenachsen länglich und biegeelastisch in dem Sinn ist, daß sich der Krümmungsradius (R) der konvexen Lagerfläche (154) an den Krümmungsradius (R1) der konkaven Lagerfläche (156) unter Belastung annähern kann.

58. Wälzlager nach einem der Ansprüche 55 - 57,
dadurch gekennzeichnet,
daß das Verhältnis der Querschnittshöhe (s) zur Querschnittslänge (q) des Einsatzes (152) zwischen 0,2 und 0,8, vorzugsweise zwischen 0,25 und 0,5 liegt.

59. Wälzlager nach Anspruch 15, dadurch gekennzeichnet, daß die Bogenführungen (A30) einer Bogenrollenreihe (A3) mit mindestens einer den Rollenumfangsflächen (14b) dieser Bogenrollenreihe (A3) anliegenden inneren Bogenrollenlaufbahn (A32), mindestens einer den Rollenumfangsflächen (14b) dieser Bogenrollenreihe (A3) anliegenden äußeren Bogenrollenlaufbahn (A31) und zwei den Rollenendflächen (14c) dieser Bogenrollenreihe (A3) gegenüberstehenden Bogenrollenstützbahnen (A33,A34) ausgeführt sind, daß die Rücklaufführung (A20) der zugehörigen rücklaufenden Rollenreihe (A2) mit mindestens einer inneren, den Rollenumfangsflächen (14b) dieser rücklaufenden Rollenreihe (A2) anliegenden Rücklaufrollenlaufbahn (A22), mindestens einer den Rollenumfangsflächen (14b) dieser rücklaufenden Rollenreihe (A2) anliegenden äußeren Rücklaufrollenlaufbahn (A21) und mit den Rollenendflächen (14c) dieser rücklaufenden Rollenreihe (A2) gegenüberliegenden Rücklaufrollenstützbahnen (A23,A24) ausgeführt ist, daß den Rollenendflächen (14c) der zugehörigen lastübertragenden Rollenreihe (A1) Lastrollenstützbahnen (A13,A14) gegenüberliegen, daß die innere Bogenrollenlaufbahn (A32) an die lastaufnehmende Laufbahn (A12) des Führungswagens (12) und an die innere Rücklaufrollenlaufbahn (A22) anschließt, daß die äußere Bogenrollenlaufbahn (A31) an die lastaufnehmende Laufbahn (A11) der Führungsschiene (10) und an die äußere Rücklaufrollenlaufbahn (A21) anschließt, daß jede der Bogenrollenstützbahnen (A33,A34) an je eine Rücklaufrollenstützbahn (A23,A24) und je eine Lastrollenstützbahn (A13,A14) anschließt, daß die geradlinigen lastübertragenden Rollenreihen (A1,B1) und die zugehörigen im wesentlichen geradlinigen rücklaufende Rollenreihen (A2,B2) auf einer Seite der Mittelebene (S) in einer Hauptkörpereinheit (20) des Führungswagens (12) angeordnet sind, daß die zugehörigen Bogenführungen (A30,B30) in Endeinheiten (50) des Führungswagens (12) ausgebildet sind, daß eine Endeinheit (50) einen zwei Bogenführungen (A30,B30) gemeinsamen Grundkörper (24) aufweist, daß in dem Grundkörper (24) für beide Bogenführungen (A30,B30) je eine Bogenrollenstützbahn (A34) und die Bogenrollenlaufbahnen (A31,A32) ausgebildet sind und daß für jede Bogenführung (A30,B30) ein Deckelkörper (26) mit einer zweiten Bogenrollenstützbahn (A33) an dem gemeinsamen Grundkörper (24) befestigt ist.

60. Wälzlager nach Anspruch 59,
dadurch gekennzeichnet,
daß die einander benachbarten Lastenrollenstützbahnen (A14,B14) der beiden auf einer Seite der Mittelebene (S) gelegenen Rollenumläufe (A,B) durch eine ihnen gemeinsame Stützleistenanordnung (16) gebildet sind und daß diese Stützleistenanordnung (16) von zwei in Längsmitte der Hauptkörpereinheit (20) geteilten Stützleisten (17) gebildet ist, von denen jede mit einem Grundkörper (24) einstückig hergestellt ist.

61. Wälzlager nach einem der Ansprüche 59 und 60,
dadurch gekennzeichnet,
daß von den Lastrollenstützbahnen (A13,A14) mindestens eine die Umfangsflächen (14b) der Rollen (14) einer lastübertragenden Rollenreihe (A1) derart übergreift, daß die Rollen (14) der lastübertragenden Rollenreihe (A1) bei Trennung von Führungsschiene (10) und Führungswagen (12) am Führungswagen (12) unverlierbar gesichert sind.

62. Wälzlager nach einem der Ansprüche 59 - 61,
dadurch gekennzeichnet,
daß der Grundkörper (24) und die beiden Deckelkörper (26) an einem Ende der Hauptkörpereinheit (20) durch eine an der Hauptkörpereinheit (20) des Führungswagens (12) angebrachte Abschlußplatte (34) übergriffen sind.

63. Wälzlager nach Anspruch 62,
dadurch gekennzeichnet,
daß die Abschlußplatte (34) je einem Grundkörper (24) und zwei zugehörigen Deckelkörpern (26) zu beiden Seiten der Mittelebene (S) gemeinsam ist.

**64.** Wälzlager nach einem der Ansprüche 60 - 63, dadurch gekennzeichnet,

daß die Deckelkörper (26) an dem Grundkörper (24) in zur Längsachse (L) parallelen Anlageflächen (26a) anliegen und in einer Richtung (26b) orthogonal zur Längsachse (L) an dem Grundkörper (24) anbringbar sind, wenn der Grundkörper (24) mit der zugehörigen Stützleiste (17) in Betriebsposition an der Hauptkörpereinheit (20) angebaut ist.

**Claims**

1. Rolling bearing for linear movements, comprising a guide rail (10) with a longitudinal axis (L), a guide carriage (12) as well as at least one rolling member circuit (A) for guiding the guide carriage (12) on the guide rail (10), wherein the rolling member circuit (A), of which there is at least one, comprises a rectilinear load-transmitting row of rolling members (A1) in engagement with a load-bearing track (A12) of the guide carriage (12) parallel to the longitudinal axis (L) of the guide rail (10) and a load-receiving track (A11) of the guide rail (10) parallel to the longitudinal axis (L) of the guide rail (10), a substantially rectilinear return row of rolling members (A2) in a return guide (A20) of the guide carriage (12) and two curved rows of rolling members (A3) in curved guides (A30) of the guide carriage (12) and wherein the oscillations of the guide carriage (12) are damped relative to the guide rail (10) by at least one lubricant cushion (72,74), characterised in that the lubricant cushion (72,74) is arranged between the guide carriage (12) itself and the guide rail (10).

2. Rolling bearing according to claim 1, characterised in that with a U-shaped design of the guide carriage (12) with a web part (12b) opposing a top face (10a) of the guide rail (10) and two arm parts (12c) each opposing a lateral face (10b) of the guide rail (10), the lubricant cushion (72,74) is provided between at least one of the pairs of top face (10a) - web part (12b) and lateral face (10b) - arm part (12c).

3. Rolling bearing according to claim 2, characterised in that lubricant cushions (72,74) are provided between the top face (10a) of the guide rail (10) and an internal face (12f), opposing the top face (10a), of the web part (12b) and also between opposing oblique faces of the guide rail (10) and the web part (12b) adjacent to the top face (10a) or the internal face (12f).

4. Rolling bearing according to any one of claims 2 and 3, characterised in that, in the presence of two rolling member circuits (A,B) in at least one arm part (112c) of the U-shaped guide carriage (112) with two load-transmitting rows of rolling members (A1,B1) associated with a rolling member circuit (A, B) in each case, a lubricant cushion (175) is formed between the load-transmitting rows of rolling members (A1,B1) by the guide rail (110) and a part (116) of the guide carriage (112).

5. Rolling bearing according to claim 4, characterised in that a lubricant cushion (175) is formed between the guide rail (110) and a support strip arrangement (116) which serves to support the load-transmitting rows of rolling members (A1,B1) on the guide carriage (112).

6. Rolling bearing according to claim 2, characterised in that on the U-shaped guide carriage (212), more specifically in its end regions located outside the rolling member circuits, there are mounted guide blocks (279) which, together with the lateral faces (210b) of the guide rail (210) form at least one lubricant cushion (275a,275b,275c) in each case.

7. Rolling bearing according to claim 6, characterised in that with the design of a lateral face (210b) of the guide rail (210) with a trapezoidal profile (283), the guide block (279) has a complementary trapezoidal profile (285) and in that lubricant cushions (275a, 275b,275c) are constructed between each of at least three limiting faces (210b2,210b1,210b3; 285a,285b,285c) of the two trapezoidal profiles (283,285).

8. Rolling bearing according to any one of claims 6 and 7, characterised in that the guide blocks (279) are arranged inside a main member (220) of the guide carriage (212) in recesses (277) in this main member (220).

9. Rolling bearing according to claim 8, characterised in that the guide blocks (279) rest inside their recesses (277) on limiting faces (281) of these recesses (277) which are flush with an internal face (212f) of the web part (212b) opposing the top face (210a) of the guide rail (210).

10. Rolling bearing according to any one of claims 1 to 9, characterised in that the lubricant cushion (72,74) is a lubricating oil cushion.

11. Rolling bearing according to any one of claims 1 to 10, characterised in that the lubricant cushion (72,74) is constructed between faces (10a,12f) which are spaced about 5 μ to about 100 μ apart.

12. Rolling bearing according to any one of claims 1 to 11, characterised in that the lubricant of the lubricant cushion (72,74) is under pressure.

13. Rolling bearing according to any one of claims 1 to 12, characterised in that the lubricant of the lubricant cushion (72,74) is provided by a lubricant supply system (70) which also serves to supply the rolling member circuit (A), of which there is at least one, with lubricant.

14. Rolling bearing according to any one of claims 1 to 13, characterised in that the rolling members (14) of the at least one rolling member circuit (A) are constructed as cylindrical rollers.

15. Rolling bearing according to any one of claims 1 to 14, applied to a type of the roller bearing wherein the roller bearing comprises a guide rail (10) with a longitudinal axis (L), two lateral faces (10b), a top face (10a) and a centre plane (S) between the two lateral faces (10b) and further comprises a U-shaped guide carriage (12) with a web (12b) which extends parallel to a web plane (E-E) and opposes the top face (10a) of the guide rail (10) and with arms (12c) adjacent to the lateral faces (10b) of the guide rail (10), and further comprises a plurality of rolling member circuits (A,B) for guiding the guide carriage (12) on the guide rail (10), wherein two rolling member circuits (A,B), namely roller circuits, are arranged on at least one side of the centre plane (S), wherein, moreover, each of the two roller circuits (A,B) is constructed with rollers (14) with a roller axis (14a), a roller peripheral surface (14b), axially spaced roller end faces (14c) and a roller centre (14d) located on the roller axis (14a) in the centre between the two end faces (14c), wherein, moreover, each roller circuit (A,B) comprises a rectilinear load-transmitting row of rollers (A1,B1) in engagement with a load-bearing track (A12,B12) of the guide carriage (12) parallel to the longitudinal axis (L) of the guide rail (10) and a load-bearing track (A11,B11) of the guide rail (10) parallel to the longitudinal axis (L) of the guide rail (10), a substantially rectilinear return row of rollers (A2,B2) in a return guide (A20,B20) of the guide carriage (12) and two curved rows of rollers (A3) in curved guides (A30) of the guide carriage (12), wherein, moreover, the roller axes (14a) of all rollers (14) of each roller circuit (A,B) are arranged parallel to one another, wherein, moreover, the two roller circuits (A,B) each define a circuit plane (UA,UB) which approximately contains the centres (14d) of the rollers (14) of the load-transmitting row of rollers (A1,B1) and the return row of rollers (A2,B2) of the respective roller circuit (A,B), wherein, moreover, the rollers (14) of the respective load-transmitting row of rollers (A1,B1) of each roller circuit (A,B) define a force-transmitting plane (KA,KB) which is perpendicular to the roller axes (14a) of the rollers (14) of the load-transmitting row of rollers (A1,B1) and contains the centres (14d) of the rollers (14) of this load-transmitting row of rollers (A1,B1), wherein, moreover, the circuit planes (UA,UB) and the force-transmitting planes (KA,KB) of the two roller circuits (A,B) are parallel to the longitudinal axis (L) of the guide rail (10), wherein, moreover, the force-transmitting planes (KA,KB) of the load-transmitting rows of rollers (A1,B1) of the two roller circuits (A,B) together enclose a first angle ($\alpha$) and the circuit planes (UA, UB) of the two roller circuits (A,B) together enclose a second angle ($\beta$), wherein, moreover, the projections of the two roller circuits (A,B) do not intersect in the direction of the longitudinal axis (L), wherein, moreover, the two roller circuits (A,B) are superimposed perpendicularly to the web plane (E-E), wherein, moreover, the return rows of rollers (A2,B2) of the two roller circuits (A,B) are more remote from the centre plane (S) of the guide rail (10) than the load-transmitting rows of rollers (A1,B1) of the two roller circuits (A,B), wherein moreover, in each of the roller circuits (A,B), the rollers (14) of the return row of rollers (A2,B2) being offset from the rollers (14) of the load-transmitting row of rollers (A1,B1) in the direction of the roller axes (14a) of the respective roller circuit (A,B) by a respective offset distance (V) and successive rollers (14) of the two curved rows of rollers (A3) of the respective roller circuit (A,B) being offset from one another by respective individual offset distances in the direction of the respective roller axes (14a), the sum of said individual offset distances formed over the respective curved row of rollers corresponding to the respective offset distance (V), the offset direction of the return rows of rollers (A2,B2) relative to the load-transmitting rows of rollers (A1,B1) of the two roller circuits (A,B) being selected such that the second angle ($\beta$) is smaller than the first angle ($\alpha$).

16. Rolling bearing according to claim 15, characterised in that the angle ($\beta$) enclosed by the circuit planes (UA,UB) of the two roller circuits (A,B) is zero, in that the load-transmitting rows of rollers (A1,B1) of the two roller circuits (A,B) are superimposed in perpendicular direction to the web plane (E-E) and in that the return rows of rollers (A2,B2) of the two roller circuits (A,B) are also superimposed in perpendicular direction to the web plane (E-E).

17. Rolling bearing according to any one of claims 15 and 16, characterised in that the two roller circuits (A,B) extend over equal lengths in the longitudinal direction of the guide carriage (12).

18. Rolling bearing according to any one of claims 15 to 17, characterised in that the force transmission planes (KA,KB) of the load-transmitting rows of rollers (A1,B1) of the two roller circuits (A,B) enclose a first angle ($\alpha$) of about 90° with one another.

**19.** Rolling bearing according to any one of claims 15 to 18, characterised in that two roller circuits (A,B) are arranged on each side of centre plane (S).

**20.** Rolling bearing according to any one of claims 15 to 19, characterised in that the roller circuits (A,B) are arranged substantially symmetrically to one another with respect to the centre plane (S) on either side of the centre plane (S).

**21.** Rolling bearing according to any one of claims 15 to 20, characterised in that the curved guide (A30) of one curved row of rollers (A3) is provided with at least one internal curved roller track (A32) for engagement with the roller peripheral surfaces (14b) of this curved row of rollers (A3), with

at least one external curved roller track (A31) for engagement with the roller peripheral surfaces (14b) of this curved row of rollers (A3) and with two curved roller support webs (A33,A34) opposing said roller end faces (14c) of this curved row of rollers (A3), in that the return guide (A20) of the associated return row of rollers (A2) is provided with at least one internal return roller track (A22) for engagement with the roller peripheral surfaces (14b) of this return row of rollers (A2), with at least one external return roller track (A21) for engagement with the roller peripheral surfaces (14b) of this return row of rollers (A2) and with return roller support webs (A23,A24) opposing said roller end faces (14c) of this return row of rollers (A2), in that the roller end faces (14c) of the associated load-transmitting row of rollers (A1) are opposite to load roller support webs (A13,A14), in that the internal curved roller track (A32) joins the load-bearing track (A12) of the guide carriage (12) and the internal return roller track (A22), in that the external curved roller track (A31) joins the load-bearing track (A11) of the guide rail (10) and the external return roller track (A21) and in that each of the curved roller support webs (A33,A34) joins one of a return roller support web (A23,A24) and one of a load roller support web (A13,A14).

**22.** Rolling bearing according to any one of claims 15 to 21, characterised in that at least one rectilinear load-transmitting row of rollers (A1) and the associated substantially rectilinear return row of rollers (A2) are arranged in a main member unit (20) of the guide carriage (12) and in that at least one associated curved guide (A30) is formed in one end unit (50) of the guide carriage (12).

**23.** Rolling bearing according to claim 22, characterised in that the end unit (50) is connected to the main member unit (20) in a parting plane (30) substantially perpendicular to the longitudinal axis (L).

**24.** Rolling bearing according to any one of claims 21 to 23, characterised in that at least one rectilinear load-transmitting row of rollers (A1) and the associated substantially rectilinear return row of rollers (A2) are arranged in a main member unit (20) of the guide carriage (12) and in that at least one associated curved guide (A30) is formed in one end unit (50) of the guide carriage (12), wherein the end unit (50) has a base member (24) and a covering member (26) and wherein one curved roller support web (A34) of the curved roller support webs (A33,A34) and at least part of the curved roller tracks (A31,A32) are formed in the base member (24) and wherein at least the second curved roller support web (A33) is formed on the covering member (26).

**25.** Rolling bearing according to claim 24, characterised in that a base member (24) of the end unit (50) is common to two curved guides (A30,B30) and in that a covering member (26) is fixed on the common base member (24) for each curved guide (A30,B30).

**26.** Rolling bearing according to any one of claims 22 to 25, characterised in that transition support web portions (A43,A44) tangentially follow the curved roller support webs (A33,A34), these transition support web portions (A43,A44) tangentially following the associated return roller support webs (A23,A24) and the associated load roller support webs (A13,A14) and being arranged inside the end unit (50).

**27.** Rolling bearing according to any one of claims 21 to 26, characterised in that at least one of the load roller support webs (A13,A14) embraces the peripheral surfaces (14b) of the rollers (14) of a load-transmitting row of rollers (A1) such that the rollers (14) of the load-transmitting row of rollers (A1) are permanently secured on the guide carriage (12) when the guide rail (10) and guide carriage (12) are separated.

**28.** Rolling bearing according to any one of claims 21 to 27, characterised in that mutually adjacent load roller support webs (A14,B14) of two roller circuits (A,B) are formed by a support strip arrangement (16) common to them.

**29.** Rolling bearing according to any one of claims 22 to 27, characterised in that mutually adjacent load roller support webs (A14,B14) of two roller circuits (A,B) are formed by a support strip arrangement (16) common to them and in that this support strip arrangement (16) is formed by two support strips (17) divided in the longitudinal centre of the main member unit (20), each of which is produced integrally with a part (24) of an end unit (50).

30. Rolling bearing according to any one of claims 15 to 29, characterised in that the load-bearing track (A12) of at least one roller circuit (A) is formed by an insert (152) in the guide carriage (112).

31. Rolling bearing according to claim 30, characterised in that the insert (152) is mounted at the guide carriage (112) in a swinging manner round a swinging axis (158) parallel to the longitudinal axis of the guide rail (110).

32. Rolling bearing according to claim 31, characterised in that the insert (152) provides a convex bearing face (154) engaging with a concave bearing face (156) of the guide carriage (112).

33. Rolling bearing according to claim 32, characterised in that the convex bearing face (154) has a smaller radius of curvature than the concave bearing face (156).

34. Rolling bearing according to any one of claims 30 to 33, characterised in that the insert (152) engages at least at one end in a recess (160) in an end unit of the guide carriage (112) mounted at the end of a main member unit of the guide carriage (112).

35. Rolling bearing according to any one of claims 15 to 34, characterised in that at least one return guide (A20) is formed by a cylindrical bore (A29) of the guide carriage (12), which cylindrical bore (A29) is widened by substantially rectangular niches (A28), wherein the diameter of the bore (A29) is greater than the diameter of the rollers (14) and smaller than the axial length of the rollers (14) and wherein the niches (A28) engage the end faces (14c) of the rollers (14) and the end sections of the peripheral surfaces (14b) of the rollers (14).

36. Rolling bearing according to claim 35, characterised in that, when constructing the guide carriage (12) with a main member unit (20) and an end unit (50) having a curved guide (A30), the end unit (50) is provided, in one end region of the curved guide (A30), with circular segment-shaped projections (40) which engage in the bore (A29) of the guide carriage (12) forming at least one return guide (A20).

37. Rolling bearing according to any one of claims 15 to 34, characterised in that at least one return guide (A20) is formed by a guide lining (162) in a duct (A29) of the guide carriage (112).

38. Rolling bearing according to claim 37, characterised in that the duct (A29) is formed by a circular cylindrical bore.

39. Rolling bearing according to any one of claims 37 and 38, characterised in that, when constructing the guide carriage (112) with a main member unit and at least one end unit mounted at an axial end of the main member unit, at least a part (162a) of the guide lining is integral with a part (124) of an end unit.

40. Rolling bearing according to any one of claims 37 to 39, characterised in that the guide lining (162) is divided in the longitudinal direction.

41. Rolling bearing according to any one of claims 25 to 40, characterised in that the base member (24) and the two covering members (26) are embraced by a terminal plate (34) mounted on the main member unit (20) of the guide carriage (12) at one end of the main member unit (20).

42. Rolling bearing according to claim 41, characterised in that the terminal plate (34) is common to one respective base member (24) and two associated covering members (26) on both sides of the centre plane (S).

43. Rolling bearing according to claim 41 or 42, characterised in that a sealing plate (44) adapted to the profile of the guide rail (10) is mounted on the terminal plate (34).

44. Rolling bearing according to claim 43, characterised in that sealing plates (44) mounted at the two ends of the guide carriage (12) follow a respective longitudinal sealing strip (48) of the guide carriage (12) on both lateral faces (10b) of the guide rail (10).

45. Rolling bearing according to any one of claims 15 to 44, characterised in that a lubricant cushion (72), in particular an oil cushion (72), is provided between at least one of the top face (10a) and the lateral faces (10b) of the guide rail (10), on the one hand, and a face (12f) of the guide carriage (12) opposing it at a short distance, on the other hand.

46. Rolling bearing according to claim 45, characterised in that the lubricant cushion (72) is attached to a lubricant supply system (70) which also serves to supply lubricant to at least one roller circuit (A).

47. Rolling bearing according to claim 46, characterised in that the lubricant supply system (70) possesses a plurality of lubricant connections (80a to 80e) which can be attached selectively to an external lubricant source.

48. Rolling bearing according to any one of claims 15 to 47, characterised in that the load-bearing tracks (A11,B11) of two roller circuits (A,B) converge on one side of the guide rail (10) toward the centre plane (S) of the guide rail (10) when viewed in a cross-section perpendicular to the longitudinal axis (L).

49. Rolling bearing according to any one of claims 15 to 47, characterised in that the load-bearing tracks (C11,D11) of two roller circuits diverge on one side of the guide rail (10) toward the centre plane (S) of the guide rail when viewed in a cross-section perpendicular to the longitudinal axis.

50. Rolling bearing according to any one of claims 1 to 49, applied to a type of the rolling bearing wherein the rolling bearing comprises a guide rail (10) with a longitudinal axis (L) and a guide carriage (12) as well as at least one roller circuit (A) for guiding the guide carriage (12) on the guide rail (10), wherein the roller circuit (A), of which there is at least one, comprises a rectilinear load-transmitting row of rollers (A1) in engagement with a load-bearing track (A12) of the guide carriage (12) parallel to the longitudinal axis (L) of the guide rail (10) and a load-bearing track (A11) of the guide rail (10) parallel to the longitudinal axis (L) of the guide rail (10), a substantially rectilinear return row of rollers (A2) in a return guide of the guide carriage (12), wherein, moreover, the guide carriage (12) has a main member unit (20) with the return guide (A20) and end units (50) with the curved guides (A30), wherein, moreover, the return guide (A20) is formed by a cylindrical bore (A29) which is substantially parallel to the longitudinal axis (L) of the guide rail (10) and in whose peripheral surface niches (A28) are worked for receiving the roller contour, wherein the cylindrical bore (A29) is constructed with a diameter which is greater than the roller diameter and smaller than the axial roller length and wherein substantially rectangular niches (A28) opposing the end faces (14c) of the rollers (14) and end portions of peripheral faces (14b) of the rollers (14) are provided in the cylindrical bore (A29) in two diametrally opposed peripheral regions.

51. Rolling bearing according to any one of claims 1 to 14, applied to a type of the rolling bearing wherein the rolling bearing comprises a guide rail (110) with a longitudinal axis (L) and a guide carriage (112) as well as at least one roller circuit (A) for guiding the guide carriage (112) on the guide rail (110), wherein the roller circuit (A), of which there is at least one, comprises a rectilinear load-transmitting row of rollers (A1) in engagement with a load-bearing track (A12) of the guide carriage (112) parallel to the longitudinal axis of the guide rail (110) and a load-bearing track (A11) of the guide rail (110) parallel to the longitudinal axis of the guide rail (110), a substantially rectilinear return row of rollers (A2) in a return guide (A20) of the guide carriage (112) and two curved rows of rollers (A3) in curved guides (A30) of the guide carriage (112), wherein, moreover, the guide carriage (112) has a main member unit with the return guide (A20) and end units with the curved guides (A30), wherein, moreover, the return guide (A20) is formed by a duct (A29) which is substantially parallel to the longitudinal axis of the guide rail (110) and has a guide lining (162) with an internal cross-section adapted to the roller contour, and wherein the internal lining (162) is constructed at least in part integrally with a base member (124) of an end unit in which at least part of the curved guide (A30) is constructed.

52. Rolling bearing according to claim 51, characterised in that the guide lining (162) is composed of two partial shells (162a,162b) which abut in parting planes parallel to the longitudinal axis of the guide rail (110).

53. Rolling bearing according to any one of claims 51 and 52, characterised in that the guide lining (162) is divided approximately in the longitudinal centre of the bearing main member and in that the two portions, formed in this way, of the guide lining are integrally constructed at least in part with a respective base member (124) of the two end units.

54. Rolling bearing according to claim 53, characterised in that the base members (124) of the two end units are constructed with a respective partial shell (162a) corresponding to half the length of the main member unit and in that a further partial shell (162b) corresponding to the complete length of the main member unit is assembled with the two partial shells (162a) mounted on the base members (124) to form the guide lining (162).

55. Rolling bearing according to any one of claims 1 to 54, applied to a type of the rolling bearing wherein the roller bearing comprises a guide rail (110) with a longitudinal axis (L), a guide carriage (112) as well as at least one roller circuit (A) for guiding the guide carriage (112) on the guide rail (110), wherein the roller circuit (A), of which there is at least one, comprises a rectilinear load-transmitting row of rollers (A1) in engagement with a load-bearing track (A12) of the guide carriage (112) parallel to the longitudinal axis (L) of the guide rail (110) and a load-bearing track (A11) of the guide rail (110) which is parallel to the longitudinal axis (L) of the guide rail (110), a substantially rectilinear return row of rollers (A2) in a return guide (A20) of the guide carriage (112) and two curved rows of rollers (A3) in curved guides (A30) of the guide carriage (112), wherein, moreover, the load-bearing track (A12) of at least one roller circuit (A) is formed by an insert (152) in the guide carriage (112), which is mounted in a swinging manner round a swinging axis (158) parallel to the longitudinal axis (L) of the guide rail (110) on the guide carriage (112), wherein the insert (152) has a convex bearing face (154) which engages in a concave bearing face (156) of the guide carriage (112) and wherein the radius of curvature (R) of the convex bearing face (154) is smaller than the radius of curvature (R1) of the concave bearing face (156).

56. Rolling bearing according to claim 55, characterised in that the ratio (R1/R) of the radius of curvature (R1) of the concave bearing face (156) to the radius of curvature (R) of the convex bearing face (154) is greater than 1.005 and smaller than 1.02.

57. Rolling bearing according to any one of claims 55 and 56, characterised in that the cross-section of the insert (152) in the direction of the roller axes is elongate and flexible in the sense that the radius of curvature (R) of the convex bearing face (154) can approach the radius of curvature (R1) of the concave bearing face (156) under load.

58. Rolling bearing according to any one of claims 55 to 57, characterised in that the ratio of the cross-sectional height (s) to the cross-sectional length of the insert (152) is between 0.2 and 0.8, preferably between 0.25 and 0.5.

59. Rolling bearing according to claim 15, characterised in that the curved guide (A30) of one curved row of rollers (A3) being provided with at least one internal curved roller track (A32) for engagement with the roller peripheral surfaces (14b) of this curved row of rollers (A3), with at least one external curved roller track (A31) for engagement with the roller peripheral surfaces (14b) of this curved row of rollers (A3) and with two curved roller support webs (A33,A34) opposing said roller end faces (14c) of this curved row of rollers (A3), the return guide (A20) of the associated return row of rollers (A2) being provided with

at least one internal return roller track (A22) for engagement with the roller peripheral surfaces (14b) of this return row of rollers (A2), with at least one external return roller track (A21) for engagement with the roller peripheral surfaces (14b) of this return row of rollers (A2) and with return roller support webs (A23,A24) opposing said roller end faces (14c) of this return row of rollers (A2), the roller end faces (14c) of the associated load-transmitting row of rollers (A1) being opposite to load roller support webs (A13,A14), the internal curved roller track (A32) joining the load-bearing track (A12) of the guide carriage (12) and the internal return roller track (A22), the external curved roller track (A31) joining the load-bearing track (A11) of the guide rail (10) and the external return roller track (A21),

each of the curved roller support webs (A33,A34) joining one of a return roller support web (A23,A24) and one of a load roller support web (A13,A14), the rectilinear load-transmitting rows of rollers (A1,B1) and the associated substantially rectilinear return rows of rollers (A2,B2) on one side of the centre plane (S) being arranged in a main member unit (20) of the guide carriage (12), the associated curved guides (A30,B30) being formed in end units (50) of the guide carriage (12), one end unit (50) having a base member (24) common for two curved guides (A30,B30), one curved roller support web (A34) and the curved roller tracks (A31,A32) for each of the curved

guides (A30,B30) being provided in the base member (24) and one respective covering member (26) with a second curved roller support web (A33) for each of the curved guides (A30,B30) being fixed at the common base member (24).

60. Rolling bearing according to claim 59, characterised in that mutually adjacent load roller support webs (A14,B14) of the two roller circuits (A,B) on one side of the centre plane (S) are formed by a support strip arrangement (16) common to them and in that this support strip arrangement (16) is formed by two support strips (17) divided in the longitudinal centre of the main member unit (20), each of which is produced integrally with one base member (24).

61. Rolling bearing according to any one of claims 59 and 60, characterised in that at least one of the load roller support webs (A13,A14) embraces the peripheral surfaces (14b) of the rollers (14) of a load-transmitting row of rollers (A1) such that the rollers (14) of the load-transmitting row of rollers (A1) are permanently secured on the guide carriage (12) when the guide rail (10) and guide carriage (12) are separated.

62. Rolling bearing according to any one of claims 59 to 61, characterised in that the base member (24) and the two covering members (26) are embraced by a terminal plate (34) mounted on the main member unit (20) of the guide carriage (12) at one end of the main member unit (20).

**63.** Rolling bearing according to claim 62, characterised in that the terminal plate (34) is common to respective base members (24) and respective two associated covering members (26) on both sides of the centre plane (S).

**64.** Rolling bearing according to any one of claims 60 to 63, characterised in that the covering members (26) rest on the base member (24) in abutment faces (26a) parallel to the longitudinal axis (L) and are mountable in a direction (26b) perpendicular to the longitudinal axis (L), when the base member (24) with the associated support strip (17) is mounted in operational position at the main member unit (20).

**Revendications**

**1.** Palier à contact de roulement pour déplacements linéaires, comportant un rail de guidage (10) avec un axe longitudinal (L), un chariot de guidage (12) ainsi qu'au moins une circulation de corps de roulement (A) pour le guidage du chariot de guidage (12) sur le rail de guidage (10),

     dans lequel la ou chaque circulation de corps de roulement (A) comprend une rangée de corps de roulement (A1) rectiligne, transmettant la charge, en prise avec une voie de circulation (A12), absorbant la charge, parallèle à l'axe longitudinal (L) du rail de guidage (10), appartenant au chariot de guidage (12), et une voie de circulation (A11), absorbant la charge, parallèle à l'axe longitudinal (L) du rail de guidage (10), appartenant au rail de guidage (10), une rangée de corps de roulement (A2) de retour, sensiblement rectiligne, dans un guidage de retour (A20) du chariot de guidage (12) et deux rangées de corps de roulement en arc (A3) dans des guidages en arc (A30) du chariot de guidage (12) et

     dans lequel le chariot de guidage (12) est amorti en oscillations par rapport au rail de guidage (10), par au moins un coussin de lubrifiant (72, 74),

     caractérisé

     en ce que le coussin de lubrifiant (72, 74) est placé entre le chariot de guidage (12) lui-même et le rail de guidage (10).

**2.** Palier à contact de roulement selon la revendication 1,
caractérisé
en ce que dans une réalisation en U du chariot de guidage (12) avec une partie de dos (12b), faisant face à une surface de tête (10a) du rail de guidage (10), et deux parties de branche (12c) faisant face chacune à une surface latérale (l0b) du rail de guidage (10), le coussin de lubrifiant (72, 74) est prévu entre au moins l'une des paires surface de tête (10a) - partie de dos (12b) et surface latérale (10b) - partie de branche (12c).

**3.** Palier à contact de roulement selon la revendication 2,
caractérisé
en ce que des coussins de lubrifiant (72, 74) sont prévus entre la surface de tête (10a) du rail de guidage (10) et une surface intérieure (12f) faisant face à la surface de tête (10a) de la partie de dos (12b) et en outre entre des surfaces obliques se faisant face, adjacentes à la surface de tête (10a) ou à la surface intérieure (12f), du rail de guidage (10) et de la partie de dos (12b).

**4.** Palier à contact de roulement selon l'une des revendications 2 et 3,
caractérisé
en ce qu'en présence de deux circulations de corps de roulement (A, B), dans au moins une partie de branche (112c) du chariot de guidage (112) en U, avec deux rangées de corps de roulement (A1, B1), transmettant la charge, faisant partie chacune d'une circulation de corps de roulement (A, B), il est formé un coussin de lubrifiant (175), entre les rangées de corps de roulement (A1, B1) transmettant la charge, par le rail de guidage (110) et une partie (116) du chariot de guidage (112).

**5.** Palier à contact de roulement selon la revendication 4,
caractérisé
en ce qu'il est formé un coussin de lubrifiant (175) entre le rail de guidage (110) et un dispositif à baguette d'appui (116), qui sert à soutenir les rangées de corps de roulement (A1, B1), transmettant la charge, au chariot de guidage (112).

**6.** Palier à contact de roulement selon la revendication 2,
caractérisé
en ce que sur le chariot de guidage (212) en U, et ce dans ses zones d'extrémité situées à l'extérieur des circulations de corps de roulement, sont appliqués des patins de guidage (279), qui forment chacun avec les surfaces latérales (210b) du rail de guidage (210) au moins un coussin de lubrifiant (275a, 275b, 275c).

**7.** Palier à contact de roulement selon la revendication 6,
caractérisé
en ce que dans le cas où une surface latérale (210b) du rail de guidage (210) présente un profil trapézoïdal (283), le patin de guidage (279) présente un profil trapézoïdal (285) complémentaire et en ce que des coussins de lubrifiant (275a, 275b, 275c) sont formés entre chaque fois au moins trois surfaces de délimitation (210b2, 210bl, 210b3 ; 285a, 285b, 285c) des deux profils trapézoïdaux (283, 285).

8. Palier à contact de roulement selon l'une des revendications 6 et 7,
caractérisé
en ce que les patins de guidage (279) sont logés à l'intérieur d'un corps principal (220) du chariot de guidage (212), dans des évidements (277) de ce corps principal (220).

9. Palier à contact de roulement selon la revendication 8,
caractérisé
en ce que les patins de guidage (279) s'appliquent, à l'intérieur de leurs évidements (277), contre des surfaces de délimitation (281) de ces évidements (277), qui sont à fleur d'une surface intérieure (212f) de la partie de dos (212b), faisant face à la surface de tête (210a) du rail de guidage (210).

10. Palier à contact de roulement selon l'une des revendications 1 à 9,
caractérisé
en ce que le coussin de lubrifiant (72, 74) est un coussin d'huile de lubrification.

11. Palier à contact de roulement selon l'une des revendications 1 à 10,
caractérisé
en ce que le coussin de lubrifiant (72, 74) est formé entre des surfaces (10a, 12f) dont la distance est comprise entre environ 5 μ et environ 100 μ.

12. Palier à contact de roulement selon l'une des revendications 1 à 11,
caractérisé
en ce que le lubrifiant du coussin de lubrifiant (72, 74) est sous pression.

13. Palier à contact de roulement selon l'une des revendications 1 à 12,
caractérisé
en ce que le lubrifiant du coussin de lubrifiant (72, 74) est fourni par un système d'alimentation de lubrifiant (70), qui sert aussi à l'alimentation en lubrifiant d'au moins une circulation de corps de roulement (A).

14. Palier à contact de roulement selon l'une des revendications 1 à 13,
caractérisé
en ce que les corps de roulement (14) d'au moins une circulation de corps de roulement (A) sont conformés en rouleaux cylindriques (14).

15. Palier à contact de roulement selon l'une des revendications 1 à 14, appliqué à un type de construction du palier de roulement dans lequel celui-ci comporte un rail de guidage (10) avec un axe longitudinal (L), deux surfaces latérales (10b), une surface de tête (10a) et un plan médian (S) entre les deux surfaces latérales (10b), en outre un chariot de guidage (12) en U avec un dos (12b) parallèle à un plan de dos (E-E), faisant face à la surface de tête (10a) du rail de guidage (10) et avec des branches (12c) voisines des surfaces latérales (l0b) du rail de guidage (10) et comporte en outre une pluralité de circulations de corps de roulement (A, B) pour le guidage du chariot de guidage (12) sur le rail de guidage (10),

dans lequel sur au moins un côté du plan médian (S) sont placées deux circulations de corps de roulement (A, B), à savoir des circulations de rouleaux,
dans lequel en outre chacune des deux circulations de rouleaux (A, B) est réalisée avec des rouleaux (14) comportant un axe de rouleau (14a), une surface périphérique de rouleau (14b), des surfaces terminales de rouleau (14c) espacées dans la direction axiale et un centre de rouleau (14d) situé sur l'axe de rouleau (14a), au milieu entre les deux surfaces terminales (14c),
dans lequel en outre chaque circulation de rouleaux (A, B) comporte une rangée de rouleaux (A1, B1) rectiligne, transmettant la charge, en prise avec une voie de circulation (A12, B12), absorbant la charge, parallèle à l'axe longitudinal du rail de guidage (10), appartenant au chariot de guidage (12) et une voie de circulation (A11, B11), absorbant la charge, parallèle à l'axe longitudinal (L) du rail de guidage (10), appartenant au rail de guidage (10), une rangée de rouleaux (A2, B2) de retour, sensiblement rectiligne, dans un guidage de retour (A20, B20) du chariot de guidage (12) et deux rangées de rouleaux en arc (A3) dans des guidages en arc (A30) du chariot de guidage (12),
dans lequel en outre les axes de rouleau (14a) de tous les rouleaux (14) de chaque circulation de rouleaux (A, B) sont disposés parallèles entre eux,
dans lequel en outre les deux circulations de rouleaux (A, B) définissent chacune un plan de circulation (UA, UB), qui contient approximativement les centres (14d) des rouleaux (14) de la rangée de rouleaux (A1, B1) transmettant la charge et de la rangée de rouleaux (A2, B2) de retour de la circulation de rouleaux (A, B) respective,
dans lequel en outre les rouleaux (14) de la rangée de rouleaux (A1, B1) transmettant la charge, respective, de chaque circulation de rouleaux (A, B), définissent un plan de transmission des forces (KA, KB), qui est perpendiculaire aux axes de rouleau (14a) des rouleaux (14) de la rangée de rouleaux (A1, B1), transmettant la charge et qui contient les centres (14d) des rouleaux (14) de cette rangée de rouleaux (A1, B1) transmettant la charge,

dans lequel en outre les plans de circulation (UA, UB) et les plans de transmission des forces (KA, KB) des deux circulations de rouleaux (A, B) sont parallèles à l'axe longitudinal (L) du rail de guidage (10),

dans lequel en outre les plans de transmission des forces (KA, KB) des rangées de rouleaux (A1, B1) transmettant la charge des deux circulations de rouleaux (A, B), forment entre eux un premier angle ($\alpha$) et les plans de circulation (UA, UB) des deux circulations de rouleaux (A, B), forment entre eux un deuxième angle ($\beta$),

dans lequel en outre les projections des deux circulations de rouleaux (A, B) sont sans intersection,

dans lequel en outre les deux circulations de rouleaux (A, B) sont superposées dans la direction perpendiculaire au plan de dos (E-E),

dans lequel en outre les rangées de rouleaux (A2, B2) de retour des deux circulations de rouleaux (A, B) sont plus éloignées du plan médian (S) du rail de guidage (10) que les rangées de rouleaux (A1, B1) transmettant la charge des deux circulations de rouleaux (A, B),

dans lequel en outre dans chacune des circulations de rouleau (A, B), les rouleaux (14) de la rangée de rouleaux (A2, B2) de retour sont décalés par rapport aux rouleaux (14) de la rangée de rouleaux (A1, B1) transmettant la charge, dans la direction des axes de rouleaux (14a) de la circulation de rouleaux (A B) respective, d'une distance de décalage (V) respective et des rouleaux (14) successifs des deux rangées de rouleaux en arc (A3) de la circulation de rouleaux (A, B) respective, sont décalés les uns par rapport aux autres, de distances de décalage individuelles respectives en direction des axes de rouleau (14a) respectifs, dont la somme, formée sur la rangée de rouleaux en arc respective, correspond à la distance de décalage (V) respective, et dans lequel la direction de décalage des rangées de rouleaux (A2, B2) de retour par rapport aux rangées de rouleaux (A1, B1) transmettant la charge des deux circulations de rouleaux (A, B), est choisie de manière que le deuxième angle ($\beta$) soit inférieur au premier angle ($\alpha$).

**16.** Palier à contact de roulement selon la revendication 15,

caractérisé
en ce que l'angle ($\beta$), formé par les plans de circulation (UA, UB) des deux circulations de rouleaux (A, B), est égal à zéro, en ce que les rangées de rouleaux (A1, B1) transmettant la charge des deux circulations de rouleaux (A, B) sont superposées dans une direction perpendiculaire au plan de dos (E-E) et en ce que les rangées de rouleaux (A2, B2) de retour des deux circulations de rouleaux (A, B) sont également superposées, dans une direction perpendiculaire au plan de dos (E-E).

**17.** Palier à contact de roulement selon l'une des revendications 15 et 16,
caractérisé
en ce que les deux circulations de rouleaux (A, B) s'étendent sur une même longueur dans la direction longitudinale du chariot de guidage (12).

**18.** Palier à contact de roulement selon l'une des revendications 15 à 17,
caractérisé
en ce que les plans de transmission des forces (KA, KB) des rangées de rouleaux (A1, B1) transmettant la charge des deux circulations de rouleaux (A, B), forment entre eux un premier angle ($\alpha$) d'environ 90°.

**19.** Palier à contact de roulement selon l'une des revendications 15 à 18,
caractérisé
en ce que deux circulations de rouleaux (A, B) sont situées sur chacun des deux côtés du plan médian (S).

**20.** Palier à contact de roulement selon l'une des revendications 15 à 19,
caractérisé
en ce que les circulations de rouleaux (A, B) sont disposées sensiblement symétriquement sur l'un et l'autre côté du plan médian (S), par rapport au plan médian (S).

**21.** Palier à contact de roulement selon l'une des revendications 15 à 20,
caractérisé
en ce que le guidage en arc (A30) d'une rangée de rouleaux en arc (A3) est réalisé avec au moins une voie de circulation de rouleaux en arc (A32) intérieure s'appliquant contre les surfaces périphériques de rouleaux (14b) de cette rangée de rouleaux en arc (A30), au moins une voie de circulation de rouleaux en arc (A31) extérieure, s'appliquant contre les surfaces périphériques de rouleaux (14B) de cette rangée de rouleaux en arc (A3) et deux voies d'appui de rouleaux en arc (A33, A34) faisant face aux surfaces d'extrémité de rouleau (14c) de cette rangée de rouleaux en arc (A3), en ce que le guidage de retour (A20) de la rangée de rouleaux (A2) de retour correspondante est réalisé avec au moins une voie de circulation de rouleaux de retour (A22) intérieure, s'appliquant contre les surfaces périphériques de rouleaux (14b) de cette rangée de rouleaux (A2) de retour, au moins une voie de circulation de rouleaux de retour (A21) extérieure, s'appliquant contre les surfaces périphériques de rouleau (14b) de cette rangée de rouleaux (A2) de retour et avec des voies d'appui de rouleaux de retour (A23, A24) faisant face aux surfaces d'extrémité de rouleaux (14c) de cette rangée de rouleaux (A2) de retour, en ce qu'aux surfaces d'extrémité de rouleaux (14c) de la rangée de rouleaux (A1) transmettant la charge, correspondante, font face des voies d'appui de rouleaux de charge (A13, A14), en ce que la voie de circulation de rouleaux en arc (A32) intérieure fait suite à la voie de circulation (A12) absorbant la charge du chariot de guidage (12) et à la voie de circulation de rouleaux de retour (A22) intérieure, en ce que la voie de circulation de rouleaux en arc (A31) extérieure fait suite à la voie de circulation (A11) absorbant la charge du rail de guidage (10) et à la voie de circulation de rouleaux de retour (A21) extérieure et en ce que chacune des voies d'appui de rouleaux en arc (A33, A34) fait suite à une voie d'appui de rouleaux de retour (A23, A24) et à une voie d'appui de rouleaux de charge (A13, A14).

22. Palier à contact de roulement selon l'une des revendications 15 à 21,
caractérisé
en ce qu'au moins une rangée de rouleaux (A1) transmettant la charge, rectiligne et la rangée de rouleaux (A2) de retour, sensiblement rectiligne, correspondante, sont placées dans une unité de corps principal (20) du chariot de guidage (12) et en ce qu'au moins un guidage en arc (A30) correspondant est formé dans une unité d'extrémité (50) du chariot de guidage (12).

23. Palier à contact de roulement selon la revendication 22,
caractérisé
en ce que l'unité d'extrémité (50) est reliée à l'unité de corps principal (20) dans un plan de séparation (30), sensiblement perpendiculaire à l'axe longitudinal (L).

24. Palier à contact de roulement selon l'une des revendications 21 à 23,
caractérisé
en ce qu'au moins une rangée de rouleaux (A1) transmettant la charge, rectiligne, et la rangée de rouleaux (A2) de retour, sensiblement rectiligne, correspondante, sont placées dans une unité de corps principal (20) du chariot de guidage (12) et en ce qu'au moins un guidage en arc (A30) correspondant est formé dans une unité d'extrémité (50) du chariot de guidage (12), l'unité d'extrémité (50) présentant un corps de base (24) et un corps de couvercle (26) et une voie d'appui de rouleaux en arc (A34) des voies d'appui de rouleaux en arc (A33, A34) et au moins une partie des voies de circulation de rouleaux en arc (A31, A32) étant formées dans le corps de base (34) et au moins la deuxième voie d'appui de rouleaux en arc (A33) étant formée sur le corps de couvercle (26).

25. Palier à contact de roulement selon la revendication 24,
caractérisé
en ce qu'un corps de base (24) de l'unité d'extrémité (50) est commun à deux guidages en arc (A30, B30) et en ce que pour chaque guidage en arc (A30, B30), un corps de couvercle (26) est fixé sur le corps de base (24) commun.

26. Palier à contact de roulement selon l'une des revendications 22 à 25,
caractérisé
en ce qu'aux voies d'appui de rouleaux en arc (A33, A34) font suite tangentiellement des portions de voie d'appui de transition (A43, A44), qui font suite tangentiellement aux voies d'appui de rouleaux de retour (A23, A24) correspondantes et aux voies d'appui de rouleaux de charge (A13, A14) correspondantes et sont logées à l'intérieur de l'unité d'extrémité (50).

27. Palier à contact de roulement selon l'une des revendication 21 à 26,
caractérisé
en ce que l'une au moins des voies d'appui de rouleaux de charge (A13, A14) passe sur les surfaces périphériques (14b) des rouleaux (14) d'une rangée de rouleaux (A1) transmettant la charge, de manière que les rouleaux (14) de la rangée de rouleaux (A1) transmettant la charge soient bloqués de manière imperdable sur le chariot de guidage (12), lors de la séparation du rail de guidage (10) et du chariot de guidage (12).

28. Palier à contact de roulement selon l'une des revendications 21 à 27,
caractérisé
en ce que des voies d'appui de rouleaux de charge (A14, B14) voisines l'une de l'autre de deux circulations de rouleaux (A, B) sont formées par un dispositif à baguette d'appui (16), qui leur est commun.

29. Palier à contact de roulement selon l'une des revendications 22 à 27,
caractérisé
en ce que des voies d'appui de rouleaux de charge (A14, B14) voisines l'une de l'autre de deux circulations de rouleaux (A, B), sont formées par un dispositif à baguette d'appui (16) qui leur est commun et en ce que ce dispositif à baguette d'appui (16) est formé par deux baguettes d'appui (17) partagées au milieu de la longueur de l'unité de corps principal (20), dont chacune est réalisée d'un seul tenant avec une partie (24) d'une unité d'extrémité (50).

30. Palier à contact de roulement selon l'une des revendications 15 à 29,
caractérisé
en ce que la voie de circulation (A12) absorbant la charge d'au moins une circulation de rouleaux (A) est formée par au moins un insert (152) dans le chariot de guidage (112).

31. Palier à contact de roulement selon la revendication 30,
caractérisé
en ce que l'insert (152) est monté de manière à basculer sur le chariot de guidage (112), autour d'un axe de basculement (158), parallèle à l'axe longitudinal du rail de guidage (110).

32. Palier à contact de roulement selon la revendication 31,
caractérisé
en ce que l'insert (152) présente une surface de palier (154) convexe qui s'engage dans une surface de palier (156) concave du chariot de guidage (112).

33. Palier à contact de roulement selon la revendication 32,
caractérisé
en ce que la surface de palier (154) convexe possède un plus petit rayon de courbure que la surface de palier (156) concave.

34. Palier à contact de roulement selon l'une des revendications 30 à 33,
caractérisé
en ce que l'insert (152) s'engage, à au moins une extrémité, dans un évidement (160) d'une unité d'extrémité du chariot de guidage (112), qui est fixée à l'extrémité d'une unité de corps principal du chariot de guidage (112).

35. Palier à contact de roulement selon l'une des revendications 15 à 34,
caractérisé
en ce qu'au moins un guidage de retour (A20) est formé par un perçage cylindrique (A29) du chariot de guidage (12), qui est élargi dans deux zones périphériques diamétralement opposées l'une à l'autre, par des niches (A28) sensiblement rectangulaires, le diamètre du perçage (A29) étant supérieur au diamètre des rouleaux (14) et inférieur à la longueur axiale des rouleaux (14) et les niches (A28) s'appliquant contre les surfaces d'extrémité (14c) des rouleaux (14) et contre des portions d'extrémité des surfaces périphériques (14b) des rouleaux (14).

36. Palier à contact de roulement selon la revendication 35,
caractérisé
en ce que dans le cas où le chariot de guidage (12) est réalisé avec une unité de corps principal (20) et une unité d'extrémité (50), présentant un guidage en arc (A30), l'unité d'extrémité (50) est pourvue, dans la zone d'une extrémité du guidage en arc (A30), de prolongements (40) en segments de cercle, qui s'engagent dans le perçage (A29).

37. Palier à contact de roulement selon l'une des revendications 15 à 34,
caractérisé
en ce qu'au moins un guidage de retour (A20) est formé par un revêtement de guidage (162) dans un canal (A29) du chariot de guidage (112).

38. Palier à contact de roulement selon la revendication 37,
caractérisé
en ce que le canal (A29) est formé par un perçage cylindrique à base circulaire.

39. Palier à contact de roulement selon l'une des revendications 37 et 38,
caractérisé
en ce que dans le cas où le chariot de guidage (112) comporte 5 une unité de corps principal et au moins une unité d'extrémité, fixée à une extrémité axiale de l'unité de corps principal, une partie (162a) au moins du revêtement de guidage est réalisée d'un seul tenant avec une partie (124) d'une unité d'extrémité.

40. Palier à contact de roulement selon l'une des revendications 37 à 39,
caractérisé
en ce que le revêtement de guidage (162) est partagé dans la direction longitudinale.

41. Palier à contact de roulement selon l'une des revendications 25 à 40,
caractérisé
en ce que sur le corps de base (24) et sur les deux corps de couvercle (26) passe, à une extrémité de l'unité de corps principal (20), une plaque de fermeture (34) fixée sur l'unité de corps principal (20) du chariot de guidage (12).

42. Palier à contact de roulement selon la revendication 41,

caractérisé

en ce que la plaque de fermeture (34) est commune à un corps principal (24) et à deux corps de couvercle (26) correspondants, sur chacun des deux côtés du plan médian (S).

**43.** Palier à contact de roulement selon la revendication 41 ou 42,

caractérisé

en ce que sur la plaque de fermeture (34) est fixée une plaque d'étanchéité (44), adaptée au profil du rail de guidage (10).

**44.** Palier à contact de roulement selon la revendication 43,

caractérisé

en ce que des plaques d'étanchéité (44), fixées aux deux extrémités du chariot de guidage (12), font suite à une baguette d'étanchéité longitudinale (48) du chariot de guidage (12), sur chacune des deux surfaces latérales (l0b) du rail de guidage (10).

**45.** Palier à contact de roulement selon l'une des revendications 15 à 44,

caractérisé

en ce qu'entre au moins l'une des surfaces de tête (10a) et les surfaces latérales (10b) du rail de guidage (10) d'une part et une surface (12f), faisant face à celui-ci, à courte distance, du chariot de guidage (12) d'autre part, il est prévu un coussin de lubrifiant (72), en particulier un coussin d'huile (72).

**46.** Palier à contact de roulement selon la revendication 45,

caractérisé

en ce que le coussin de lubrifiant (72) est raccordé à un système d'alimentation de lubrifiant (70), qui sert aussi à l'alimentation en lubrifiant d'au moins une circulation de rouleaux (A).

**47.** Palier à contact de roulement selon la revendication 46,

caractérisé

en ce que le système d'alimentation en lubrifiant (70) possède une pluralité de raccords de lubrifiant (80a à 80e), pouvant être raccordés au choix à une source de lubrifiant externe.

**48.** Palier à contact de roulement selon l'une des revendications 15 à 47,

caractérisé

en ce que les voies de circulation (A11, B11) absorbant la charge de deux circulations de rouleaux (A, B) sur un côté du rail de guidage (10), convergent, vues dans une coupe transversale perpendiculaire à l'axe longitudinal (L), vers le plan médian (S) du rail de guidage (10).

**49.** Palier à contact de roulement selon l'une des revendications 15 à 47,

caractérisé

en ce que les voies de circulation (C11, D11) absorbant la charge de deux circulations de rouleaux sur un côté du rail de guidage (10) divergent, vues dans une coupe transversale perpendiculaire à l'axe longitudinal, vers le plan médian (S) du rail de guidage.

**50.** Palier à contact de roulement selon l'une des revendications 1 à 49 appliqué à un type de construction du palier de roulement, dans lequel celui-ci comporte un rail de guidage (10) avec un axe longitudinal (L), un chariot de guidage (12) ainsi qu'au moins une circulation de rouleaux (A) pour le guidage du chariot de guidage (12) sur le rail de guidage (10),

dans lequel la ou chaque circulation de rouleaux (A) comporte une rangée de rouleaux (A1) transmettant la charge, rectiligne, en prise avec une voie de circulation (A12), absorbant la charge, parallèle à l'axe longitudinal (L) du rail de guidage (10), appartenant au chariot de guidage (12) et une voie de circulation (A11), absorbant la charge, parallèle à l'axe longitudinal (L) du rail de guidage (10), appartenant au rail de guidage (10), une rangée de rouleaux (A2) de retour, sensiblement rectiligne dans un guidage de retour du chariot de guidage (12), dans lequel en outre le chariot de guidage (12) comporte une unité de corps principal (20) avec le guidage de retour (A20) et des unités d'extrémité (50) avec les guidages en arc (A30), dans lequel en outre le guidage de retour (A20) est formé par un perçage (A29) cylindrique, sensiblement parallèle à l'axe longitudinal (L) du rail de guidage (10), dans la surface périphérique duquel sont pratiquées des niches (A28) pour recevoir le contour des rouleaux, dans lequel le perçage cylindrique (A29) présente un diamètre qui est supérieur au diamètre des rouleaux et inférieur à la longueur axiale des rouleaux, et dans lequel, dans le perçage cylindrique (A29), dans deux zones périphériques diamétralement opposées l'une à l'autre, sont prévues des niches (A28) sensiblement rectangulaires, qui font face aux surfaces terminales (14c) des rouleaux (14) et à des portions d'extrémité de surfaces périphériques (14b) des rouleaux (14).

**51.** Palier à contact de roulement selon l'une des revendications 1 à 14, appliqué à un type de construction du palier de roulement, dans lequel celui-ci comporte un rail de guidage (110) avec un axe longitudinal (L), un chariot de guidage (112) ainsi qu'au moins une circulation de rouleaux (A) pour le guidage du chariot de guidage (112) sur le rail de guidage (110),

dans lequel au moins une circulation de rouleaux (A) comporte une rangée de rouleaux (A1) rectiligne, transmettant la charge, en prise avec une voie de circulation (A12), absorbant la charge, parallèle à l'axe longitudinal du rail de guidage (110), appartenant au chariot de guidage (112) et une voie de circulation (A11), absorbant la charge, parallèle à l'axe longitudinal du rail de guidage (110), appartenant au rail de guidage (110), une rangée de rouleaux (A2) de retour, sensiblement rectiligne, dans un guidage de retour (A20) du chariot de guidage (112) et deux rangées de rouleaux en arc (A3) dans des guidages en arc (A30) du chariot de guidage (112),

dans lequel en outre le chariot de guidage (112) comporte une unité de corps principal avec le guidage de retour (A20) et des unités d'extrémité avec les guidages en arc (A30), dans lequel en outre le guidage de retour (A20) est formé par un canal (A29) sensiblement parallèle à l'axe longitudinal du rail de guidage (110), qui présente un revêtement de guidage (162) avec une section transversale intérieure adaptée au contour des rouleaux, et

dans lequel le revêtement intérieur (162) est réalisé au moins en partie d'un seul tenant avec un corps de base (124) d'une unité d'extrémité, dans laquelle est formée au moins une partie du guidage en arc (A30).

52. Palier à contact de roulement selon la revendications 51,
caractérisé
en ce que le revêtement du guidage (122) est constitué de deux coques partielles (162a, 162b), qui sont jointives dans des plans de séparation parallèles à l'axe longitudinal du rail de guidage (110).

53. Palier à contact de roulement selon l'une des revendications 51 et 52,
caractérisé
en ce que le revêtement de guidage (162) est partagé approximativement au milieu de la longueur du corps principal de palier et en ce que les deux portions ainsi formées du revêtement de guidage sont réalisées au moins en partie d'un seul tenant chacune avec un corps de base (124) des deux unités d'extrémité.

54. Palier à contact de roulement selon la revendication 53,
caractérisé
en ce que les corps de base (124) des deux unités d'extrémité sont réalisés chacun avec une coque partielle (162a), correspondant à la moitié de la longueur de l'unité de corps principal et en ce qu'une autre coque partielle (162b), correspondant à la pleine longueur de l'unité de corps principal, est constituée des deux coques partielles (162a), fixées sur les corps de base (124), pour former le revêtement de guidage (162).

55. Palier à contact de roulement selon l'une des revendications 1 à 54, appliqué à un type de construction du palier de roulement, dans lequel celui-ci comporte un rail de guidage (110) avec un axe longitudinal (L), un chariot de guidage (112) ainsi qu'au moins une circulation de rouleaux (A) pour le guidage du chariot de guidage (112) sur le rail de guidage (110), dans lequel la au moins une circulation de rouleaux (A) comporte une rangée de rouleaux (A1) rectiligne, transmettant la charge, en prise avec une voie de circulation (A12) absorbant la charge, parallèle à l'axe longitudinal (L) du rail de guidage (110), appartenant au chariot de guidage (112) et une voie de circulation (A11) absorbant la charge, parallèle à l'axe longitudinal (L) du rail de guidage (110), appartenant au rail de guidage (110), une rangée de rouleaux (A2) de retour, sensiblement rectiligne dans un guidage de retour (A20) du chariot de guidage (112) et deux rangées de rouleaux en arc (A3) dans des guidages en arc (A30) du chariot de guidage (112),

dans lequel en outre la voie de circulation (A12) absorbant la charge d'au moins une circulation de rouleaux (A) est formée par un insert (152) dans le chariot de guidage (112), qui est monté de manière à basculer sur le chariot de guidage (112), autour d'un axe de basculement (158) parallèle à l'axe longitudinal (L) du rail de guidage (110), l'insert (152) présentant une surface de palier (154) convexe, qui s'engage dans une surface de palier (156) concave du chariot de guidage (112) et le rayon de courbure (R) de la surface de palier (154) convexe étant inférieur au rayon de courbure (R1) de la surface de palier (156) concave.

56. Palier à contact de roulement selon la revendication 55,
caractérisé
en ce que le rapport (R1/R) du rayon de courbure (R1) de la surface de palier (156) concave au rayon de courbure (R) de la surface de palier (154) convexe, est supérieur à 1,005 et inférieur à 1,02.

57. Palier à contact de roulement selon l'une des revendications 55 et 56,
caractérisé
en ce que la section transversale de l'insert (152) est allongée dans la direction des axes des rouleaux et élastique en flexion en ce sens que le rayon de courbure (R) de la surface de palier (154) convexe peut s'approcher sous charge du rayon de courbure (R1) de la surface de palier (156) concave.

**58.** Palier à contact de roulement selon l'une des revendications 55 à 57,
caractérisé
en ce que le rapport de la hauteur de section transversale (s) à la longueur de section transversale (q) de l'insert (152) est compris entre 0,2 et 0,8, de préférence entre 0,25 et 0,5.

**59.** Palier à contact de roulement selon la revendication 15,
caractérisé
en ce que les guidages en arc (A30) d'une rangée de rouleaux en arc (A3) sont réalisés avec au moins une voie de circulation de rouleaux en arc (A32) intérieure s'appliquant contre les surfaces périphériques des rouleaux (14b) de cette rangée de rouleaux en arc (A3), au moins une voie de roulement de rouleaux en arc (A31) extérieure s'appliquant contre les surfaces périphériques de rouleau (14B) de cette rangée de rouleaux en arc (A3) et deux voies d'appui de rouleaux en arc (A33, A34) faisant face aux surfaces d'extrémité de rouleau (14c) de cette rangée de rouleaux en arc (A3), en ce que le guidage de retour (A20) de la rangée de rouleaux (A2) de retour correspondante est réalisé avec au moins une voie de circulation de rouleaux de retour (A22) intérieure, s'appliquant contre les surfaces périphériques de rouleau (14b) de cette rangée de rouleaux (A2) de retour, au moins une voie de circulation de rouleaux de retour (A21) extérieure, s'appliquant contre les surfaces périphériques de rouleau (14b) de cette rangée de rouleaux (A2) de retour et avec des voies d'appui de rouleaux de retour (A23, A24) faisant face aux surfaces d'extrémité de rouleau (14c) de cette rangée de rouleaux (A2) de retour, en ce qu'aux surfaces d'extrémité de rouleau (14c) de la rangée de rouleaux (A1) transmettant la charge, correspondante, font face des voies d'appui de rouleaux de charge (A13, A14), en ce que la voie de circulation de rouleaux en arc (A32) intérieure fait suite à la voie de circulation (A12) absorbant la charge du chariot de guidage (12) et à la voie de circulation de rouleaux de retour (A22) intérieure, en ce que la voie de circulation de rouleaux en arc (A31) extérieure fait suite à la voie de circulation (A11) absorbant la charge du rail de guidage (10) et à la voie de circulation de rouleaux de retour (A21) extérieure, en ce que chacune des voies d'appui de rouleaux en arc (A33, A34) fait suite à une voie d'appui de rouleaux de retour (A23, A24) et à une voie d'appui de rouleaux de charge (A13, A14), en ce que les rangées de rouleaux (A1, B1) rectilignes, transmettant la charge et les rangées de rouleaux de retour (A2, A2) sensiblement rectilignes, correspondantes, sont placées sur un côté du plan médian (S) dans une unité de corps principal (20) du chariot de guidage (12), en ce que les guidages en arc (A30, B30) correspondants sont formés dans des unités d'extrémité (50) du chariot de guidage (12), en ce qu'une unité d'extrémité (50) comporte un corps de base (24) commun à deux guidages en arc (A30, B30), en ce que dans le corps de base (24) sont formées, pour les deux guidages en arc (A30, B30), une voie d'appui de rouleaux en arc (A34) et les voies de circulation de rouleaux en arc (A31, A32) et en ce que pour chaque guidage en arc (A30, B30) un corps de couvercle (26) avec une deuxième voie d'appui de rouleaux en arc (A33) est fixé sur le corps de base (24) commun.

**60.** Palier à contact de roulement selon la revendication 59,
caractérisé
en ce que les voies d'appui de rouleaux de charge (A14, B14) voisines des deux circulations de rouleaux (A, B), situées sur un côté du plan médian (S), sont formées par un dispositif à baguette d'appui (16) qui leur est commun et en ce que ce dispositif à baguette d'appui (16) est formé par deux baguettes d'appui (17) partagées au milieu de la longueur de l'unité de corps principal (20), dont chacune est réalisée d'un seul tenant avec un corps de base (24).

**61.** Palier à contact de roulement selon l'une des revendications 59 et 60,
caractérisé
en ce qu'une au moins des voies d'appui de rouleaux de charge (A13, A14) passe sur les surfaces périphériques (14b) des rouleaux (14) d'une rangée de rouleaux (A1) transmettant la charge, de telle sorte que les rouleaux (14) de la rangée de rouleaux (A1) transmettant la charge sont bloqués de manière imperdable sur le chariot de guidage (12), lors de la séparation du rail de guidage (10) et du chariot de guidage (12).

**62.** Palier à contact de roulement selon l'une des revendications 59 à 61,
caractérisé
en ce que sur le corps de base (24) et sur les deux corps de couvercle (26) à une extrémité de l'unité de corps principal (20), passe une plaque de fermeture (34) fixée sur l'unité de corps principal (20) du chariot de guidage (12).

**63.** Palier à contact de roulement selon la revendication 62,
caractérisé
en ce que la plaque de fermeture (34) est commune à un corps de base (24) et à deux corps de couvercle (26) correspondants des deux côtés du plan médian (S).

**64.** Palier à contact de roulement selon l'une des revendications 60 à 63,
caractérisé
en ce que les corps de couvercle (26) s'appliquent contre le corps de base (24) dans des surfaces d'application (26a) parallèles à l'axe longitudinal (L) et peuvent être fixés sur le corps de base (24), dans une direction (26b) orthogonale à l'axe longitudinal (L), lorsque le corps de base (24) avec la baguette d'appui (17) correspondante, est monté en position d'utilisation sur l'unité de corps principal (20).

# Fig.1

EP 0 472 167 B1

# Fig.1a

EP 0 472 167 B1

Fig.3

Fig.2

EP 0 472 167 B1

Fig.4

Fig.5

Fig.6

Fig.7

# Fig. 6a

# Fig. 4a

# Fig. 8

A 44   N4   A 24

VIII

A 34   N3

V

A 14   A 44   N2

N1

# Fig. 9

44

44a   44b

Fig.10

Fig.11

# Fig. 11a

Fig.12

Fig.13

# Fig.14

# Fig. 15

# Fig.16

EP 0 472 167 B1